# EUROPÄISCHE PATENTANMELDUNG

(11) **EP 4 840 817 A1**
(43) Veröffentlichungstag der Anmeldung: **18.11.2026**
(21) Anmeldenummer: 26176539.0
(22) Anmeldetag: 05.05.2026
(51) Int. Cl.: B66F 9/075, B66F 9/06, B66F 9/24

(54) **FLURFÖRDERZEUG MIT EINEM LASTAUFNAHMEMITTEL UND EINEM 2D-KAMERASYSTEM, VERFAHREN ZUM BETREIBEN DESSELBEN, VERFAHREN ZUM TRAINIEREN EINES NEURONALEN NETZES UND ZUM ERZEUGEN VON TRAININGSDATEN, VERWENDUNG DES FLURFÖRDERZEUGS**

(30) Priorität: 16.05.2025 DE 102025119140
(71) Anmelder: Jungheinrich AG, 22047 Hamburg (DE)
(72) Erfinder: BISTRY, Hannes, 25421 Pinneberg (DE); WETEGROVE, Ralf, 22850 Norderstedt (DE)
(74) Vertreter: Seemann & Partner Patentanwälte mbB

(57) **Zusammenfassung**

Die Erfindung betrifft ein Flurförderzeug 2 mit einem Lastaufnahmemittel 4 und einem 2D-Kamerasystem 6, ein Verfahren zum Betreiben desselben, ein Verfahren zum Trainieren eines neuronalen Netzes und zum Erzeugen von Trainingsdaten sowie die Verwendung des Flurförderzeugs 2. Das Flurförderzeug 2 weist ein Lastaufnahmemittel 4 und ein 2D-Kamerasystem 6 auf. Das Lastaufnahmemittel 4 dient zur Aufnahme einer auf einem Lasttransporthilfsmittel 10 vorhandenen Last 12. Das 2D-Kamerasystem 6 ist zur Erfassung eines Lastaufnahmebereichs eingerichtet, der sich vor dem Lastaufnahmemittel 4 in einer Lastaufnahmerichtung R erstreckt. Eine Lasterkennungseinheit 18 ist dazu eingerichtet, zumindest einen Teil des Lasttransporthilfsmittels 10 im Lastaufnahmebereich zu detektieren und das Vorhandensein des Lasttransporthilfsmittels 10 an eine Trainingsdatenerfassungseinheit 20 zu kommunizieren. Die Trainingsdatenerfassungseinheit 20 ist dazu eingerichtet, einen Trainingsdatenerfassungsbefehl zu empfangen und in Reaktion darauf von dem 2D-Kamerasystem 6 erfasste 2D-Bilddaten 8 als Trainingsdaten für ein neuronales Netz zu speichern.

## Beschreibung

Flurförderzeug mit einem Lastaufnahmemittel und einem 2D-Kamerasystem, Verfahren zum Betreiben desselben, Verfahren zum Trainieren eines neuronalen Netzes und zum Erzeugen von Trainingsdaten, Verwendung des Flurförderzeugs

### Beschreibung

Die Erfindung betrifft ein Flurförderzeug mit einem Lastaufnahmemittel und einem 2D-Kamerasystem, wobei das Lastaufnahmemittel zur Aufnahme einer auf einem Lasttransporthilfsmittel vorhandenen Last eingerichtet ist und das 2D-Kamerasystem zur Erfassung eines Lastaufnahmebereichs eingerichtet ist, der sich vor dem Lastaufnahmemittel in einer Lastaufnahmerichtung erstreckt. Ferner betrifft die Erfindung ein Verfahren zum Betreiben eines Flurförderzeugs mit einem Lastaufnahmemittel und einem 2D-Kamerasystem, wobei mit dem Lastaufnahmemittel eine auf einem Lasttransporthilfsmittel vorhandene Last aufgenommen wird und mit dem 2D-Kamerasystem ein Lastaufnahmebereich aufgenommen wird, der sich vor dem Lastaufnahmemittel in einer Lastaufnahmerichtung erstreckt. Die Erfindung betrifft ferner ein Verfahren zum Trainieren eines neuronalen Netzes, ein Verfahren zum Erzeugen von Trainingsdaten für ein neuronales Netz sowie die Verwendung des Flurförderzeugs.

Flurförderzeuge verfügen vielfach über ein oder mehrere digitale 2D-Kamerasysteme oder anderweitige Kamerasysteme, die ein 2D-Bild oder einen 2D-Bilddatenstrom, allgemein bezeichnet als 2D-Bilddaten, liefern. In einer Verarbeitungseinheit des Flurförderzeugs ist in vielen Fällen ein neuronales Netz implementiert, welches im Betrieb des Flurförderzeugs Funktionen für ein Assistenz- und Steuersystem bereitstellt. Das neuronale Netz kann beispielsweise dazu eingesetzt werden, eine Palette oder einen Teil einer Palette, beispielsweise einen Mittelklotz der Palette oder die Einschubtaschen, zu detektieren. Die detektierte Position kann im Assistenz- und Steuersystem genutzt werden, um die Lastgabeln des Flurförderzeugs oder das Flurförderzeug selbst für den Paletteneinstich auszurichten. Die Qualität der Erkennung durch das neuronale Netz steht und fällt mit seinem Training. Für ein effizientes Training des neuronalen Netzes sind qualitativ hochwertige Trainingsdaten stets wünschenswert.

Aus der DE 10 2023 106 344 A1 ist ein Flurförderzeug sowie ein Verfahren zum Betreiben des Flurförderzeugs bekannt, bei dem eine Bildverarbeitung mit einem neuronalen Netz vorgenommen wird. Objekte können in einem 2D-Bild detektiert werden. Basierend auf dem Objekterkennungsergebnis kann eine relative Position des Objekts im Kamerakoordinatensystem berechnet werden. Diese Information kann dem Fahrer angezeigt werden, der auf dieser Grundlage das Flurförderzeug steuern kann. Für das Training des neuronalen Netzes kann ein Trainingsdatensatz verwendet werden, bestehend aus Bilddaten sowie zusätzlichen Informationen, wo sich in welchem Bild welches Objekt befindet. Generell ist ein möglichst umfassender Trainingsdatensatz empfehlenswert, also ein Datensatz, in dem möglichst viele verschiedene Instanzen eines Objekttyps in unterschiedlichen Umgebungen und bei unterschiedlichen Lichtverhältnissen dargestellt sind. Auf diese Weise lernt das neuronale Netz, den Objekttyp zu generalisieren und so auch später leicht abweichende Instanzen als solche zu erkennen.

Zeigt das neuronale Netz eine Fehlfunktion oder eine Funktionseinschränkung, so ist eine Erweiterung oder Veränderung des Trainingsdatensatzes ein erfolgversprechender Ansatzpunkt zur Behebung. Hierzu können computergenerierte Trainingsdaten erzeugt werden, die die fehlgeschlagenen Szenen nachstellen. Ebenso können mit großem Aufwand Echtaufnahmen der betreffenden Szene zur Aufnahme von Trainingsdaten nachgestellt werden. Die Erweiterung des Trainingsdatensatzes auf diese Art und Weise ist ein zeitintensiver und somit teurer Prozess.

Ferner kann beim Training des neuronalen Netzes versucht werden, von vornherein jegliche Eventualitäten in den Trainingsdaten zu berücksichtigen. Dies kann ebenfalls durch Verwendung künstlich generierter Trainingsdaten erfolgen, bei denen Abweichungen in großer Zahl berücksichtigt werden. Eine Garantie, dass auch ein derart trainiertes neuronales Netz beim Einsatz in der Praxis nicht doch Erkennungsfehler liefert, kann jedoch auch dieser Ansatz nicht bieten. Im Gegenteil, durch die Berücksichtigung der großen Anzahl von Variationen, die sich beim praktischen Einsatz des neuronalen Netzes nicht zeigen, steigt die Gefahr von falsch positiven Erkennungen (False Positives). Da neuronale Netze in der praktischen Anwendung als fertig trainierte und somit abgeschlossene neuronale Netze zum Einsatz kommen, erreicht deren Funktionalität und Zuverlässigkeit stets nur ein bestimmtes Maß.

Es ist eine Aufgabe der Erfindung, ein Flurförderzeug mit einem Lastaufnahmemittel und einem 2D-Kamerasystem, ein Verfahren zum Betreiben eines solchen Flurförderzeugs, ein Verfahren zum Trainieren eines neuronalen Netzes, ein Verfahren zum Erzeugen von Trainingsdaten sowie eine Verwendung eines solchen Flurförderzeugs anzugeben, wobei eine Möglichkeit geschaffen werden soll, verbesserte Trainingsdaten für ein neuronales Netz zu gewinnen.

Die Aufgabe wird gelöst durch ein Flurförderzeug mit einem Lastaufnahmemittel und einem 2D-Kamerasystem, wobei
- das Lastaufnahmemittel zur Aufnahme einer auf einem Lasttransporthilfsmittel vorhandenen Last eingerichtet ist und
- das 2D-Kamerasystem zur Erfassung eines Lastaufnahmebereichs eingerichtet ist, der sich vor dem Lastaufnahmemittel in einer Lastaufnahmerichtung erstreckt, wobei das Flurförderzeug fortgebildet ist durch
- eine Lasterkennungseinheit, die dazu eingerichtet ist, zumindest einen Teil des Lasttransporthilfsmittels im Lastaufnahmebereich zu detektieren und
- die Trainingsdatenerfassungseinheit dazu eingerichtet ist, einen Trainingsdatenerfassungsbefehl zu empfangen und in Reaktion darauf von dem 2D-Kamerasystem erfasste 2D-Bilddaten als Trainingsdaten für ein neuronales Netz zu speichern.

Die Lasterkennungseinheit kann dazu eingerichtet sein, das Vorhandensein des Lasttransporthilfsmittels der Trainingsdatenerfassungseinheit zu kommunizieren. Entscheidend ist, dass die Trainingsdatenerfassungseinheit in Reaktion auf den Trainingsdatenerfassungsbefehl die Daten als Trainingsdaten speichert. Ein entsprechendes Erkennungsergebnis kann in der Regel, da der Typ des zur Erkennung verwendeten neuronalen Netzes typischerweise bekannt ist, auch im Nachgang noch reproduziert werden.

Mit einem solchen Flurförderzeug gelingt es, praxisrelevante Trainingsdaten für ein neuronales Netz zu gewinnen. Das neuronale Netz kann in der Lasterkennungseinheit implementiert und darauf trainiert sein, den zumindest einen Teil des Lasttransporthilfsmittels zu erkennen. Es ist nicht erforderlich, dass das neuronale Netz in dem Flurförderzeug implementiert ist. Das Flurförderzeug kann dazu eingerichtet sein, für andere Flurförderzeuge, in denen ein neuronales Netz implementiert ist, praxisrelevante Trainingsdaten zu gewinnen.

Ein entscheidender Vorteil der auf diesem Wege gewonnenen Daten besteht darin, dass sie in der tatsächlichen Umgebung, in der das Flurförderzeug betrieben wird, gewonnen werden. Gemäß einer Ausführungsform ist vorgesehen, dass die Erfassung der Trainingsdaten im Regelbetrieb des Flurförderzeugs erfolgt. Die Trainingsdaten sind somit per se relevant für die in der Praxis durchzuführende Objekterkennung. Die Stabilität der Objekterkennung kann durch die Vergrößerung des Trainingsdatensatzes um praxisrelevante Beispiele verbessert werden. Ein Aspekt, bei dem statische neuronale Netze konzeptbedingt stets Schwächen zeigen, kann somit signifikant verbessert werden. Die im Lastaufnahmebereich erfassten 2D-Bilddaten stellen stets konkrete praxisrelevante Szenarien dar, in denen das Flurförderzeug betrieben wird. Weist das Flurförderzeug eine Verarbeitungseinheit auf, in der ein neuronales Netz implementiert ist und wird dieses neuronale Netz auf der Grundlage der erfassten Trainingsdaten neu- oder nachtrainiert, so kann die Erkennungsqualität des neuronalen Netzes verbessert werden. Besonders vorteilhaft ist es, wenn die erfassten Daten dem Regelbetrieb des Flurförderzeugs entstammen, so dass ihre hohe Relevanz von vornherein gegeben ist.

Der technische Ansatz, Trainingsdaten während des praktischen Betriebs, also insbesondere während des Regelbetriebs, des Flurförderzeugs zu erfassen, beruht auf den folgenden Überlegungen: Die Funktionsweise eines neuronalen Netzes kann gewissermaßen als Blackbox aufgefasst werden. Dies bedeutet, dass bei Fehlfunktionen in der Regel nicht analysiert werden kann, warum diese Fehlfunktion auftritt. Die einzige Möglichkeit einer solchen Fehlfunktion entgegenzuwirken, stellt die Erweiterung des Trainingsdatensatzes des neuronalen Netzes dar. Eine solche Erweiterung kann erfolgen, indem Instanzen von Zielobjekten, die fälschlicherweise nicht als solche erkannt wurden, also falsche negative Ereignisse (False Negatives), trainiert werden. Ferner ist es möglich, das neuronale Netz durch Instanzen von beliebigen anderweitigen Objekten, die fälschlicherweise als Instanz des Zielobjekts erkannt wurden (falsch positive Ereignisse), zu trainieren. Das Auftreten von falsch negativen und auch falsch positiven Ereignissen kann jedoch in unbekannten Umgebungen konzeptbedingt und somit grundsätzlich nicht ausgeschlossen werden. Auch wenn bei der Produktentwicklung ein umfangreicher Trainingsdatensatz erstellt wird, kann im konkreten praktischen Einsatz in einer anderen Umgebung durch dessen spezifische optische Eigenschaften, beispielsweise andere Regaltypen oder einen anderen Bodenbelag, eine Fehlfunktion nicht völlig ausgeschlossen werden. Auch können im praktischen Einsatz neue Objekttypen, die dem neuronalen Netz bisher nicht bekannt waren, auftreten. Diese werden daher nur fehlerhaft oder nicht erkannt. Solche neuen Objekttypen können beispielsweise andere Typen von Lasttransporthilfsmitteln sein. Beispielsweise können in der praktischen Anwendung Kunststoffpaletten anstatt von während des Trainings verwendeten Holzpaletten zum Einsatz kommen. Diese grundsätzliche Limitierung des Trainings von neuronalen Netzen wird durchbrochen, indem Trainingsdaten während des praktischen Betriebs/Regelbetriebs des Flurförderzeugs gewonnen werden.

Mit dem Trainingsdatenerfassungsbefehl kann die Aufnahme von 2D-Bilddaten als Trainingsdaten für das neuronale Netz getriggert werden. Auf diese Weise können sowohl falsch positive Ereignisse, es wird also beispielsweise ein Teil des Lasttransporthilfsmittels erkannt, obwohl kein Lasttransporthilfsmittel in den 2D-Bilddaten sichtbar ist, als auch falsch negative Ereignisse, es wird das Lasttransporthilfsmittel oder ein Teil davon nicht erkannt, obwohl es in den 2D-Bilddaten vorhanden ist, trainiert werden. Ferner können auch bislang unbekannte Lasttransporthilfsmittel oder Teile davon nachtrainiert werden und fortan auf Grundlage der aktualisierten Parameter des neuronalen Netzes erkannt werden. Vorteilhaft kann so die Stabilität und Zuverlässigkeit der Erkennung des neuronalen Netzes auf der Grundlage der erfassten Trainingsdaten verbessert werden.

Das neuronale Netz kann beispielsweise ein sog. "convolutional neural network" (CNN) sein. Geeignete Typen sind beispielsweise MobileNet SSD oder Yolo.

Die 2D-Bilddaten können einzelne 2D-Bilder sein, die mit dem 2D-Kamerasystem erfasst werden. Die 2D-Bilddaten können ferner eine Vielzahl von 2D-Bildern, beispielsweise eine zeitliche Sequenz von 2D-Bildern, sein. Bei den 2D-Bilddaten kann sich ebenfalls um Videodaten handeln. Die 2D-Bilddaten können beispielsweise in einem vorbestimmten Zeitraum erfasst sein. Zu diesem Zweck können die Bilddaten beispielsweise von dem 2D-Kamerasystem fortlaufend in einem Speicher (Ringbuffer) gespeichert werden. Die Größe dieses Speichers bestimmt den maximalen Zeitraum, in welchem die Bilddaten erfasst werden können. Die Speicherung kann lokal persistent
oder nicht persistent erfolgen. Beispielsweise speichert der Speicher 2D-Bilddaten für 10s. Es werden dann als 2D-Bilddaten beispielsweise eine Bildersequenz bereitgestellt, die in den 10s vor Empfang des Trainingsdatenerfassungsbefehls erfasst wurden.

Das Flurförderzeug verfügt beispielsweise über ein Assistenzsystem, welches auf der Grundlage der 2D-Bilddaten eine Benutzerassistenz bereitstellt. Ein solches Assistenzsystem kann das neuronale Netz beispielsweise dazu einsetzen, eine Palette oder einen Teil einer Palette, beispielsweise einen Palletten-Mittelklotz oder die Einschubtaschen, zu detektieren. Die detektierte Position kann im Assistenzsystem dazu genutzt werden, um das Lasttransporthilfsmittel des Flurförderzeugs, beispielsweise die Lastgabel, oder auch das Flurförderzeug selbst für den Paletteneinstich auszurichten. Die Qualität der Erkennung durch das neuronale Netz steht und fällt mit seinem Training. Für ein effizientes Training des neuronalen Netzes können mit dem Flurförderzeug gemäß den zuvor beschriebenen Merkmalen qualitativ hochwertige Trainingsdaten gewonnen werden. In der Praxis sieht dies beispielsweise so aus, dass das Assistenzsystem nicht die erwartungsgemäßen Information liefert, und der Nutzer dies durch eine Art Beschwerdeknopf, welcher einen Trainingsdatenerfassungsbefehl generiert, quittiert. Diese Benutzereingabe setzt somit einen Trigger für die Erfassung von Trainingsdaten, welche die Reaktion des neuronalen Netzes exakt für diejenige Betriebsbedingung verbessert, in der die seitens des Benutzers festgestellte defizitäre Leistung des Systems wahrgenommen wurde.

Das Flurförderzeug ist beispielsweise fortgebildet durch eine Anzeige zur Ausgabe der 2D-Bilddaten und eine Benutzerschnittstelle zum Empfang von Benutzereingaben, wobei
- in der Lasterkennungseinheit ein neuronales Netz implementiert ist und die Lasterkennungseinheit dazu eingerichtet ist, die 2D-Bilddaten dem neuronalen Netz als Eingangsdaten zuzuführen, wobei das neuronale Netz darauf trainiert ist, in den 2D-Bilddaten zumindest einen Teil des Lasttransporthilfsmittels als Objekt zu erkennen, und das Lasterkennungseinheit ferner dazu eingerichtet ist, eine Position des erkannten Objekts in den 2D-Bilddaten mit einer Objektmarkierung zu markieren und die Objektmarkierung gemeinsam mit den 2D-Bilddaten auf der Anzeige auszugeben, wobei
- die Benutzerschnittstelle dazu eingerichtet ist, in Reaktion auf die Ausgabe der 2D-Bilddaten mit der Objektmarkierung auf der Anzeige eine Benutzereingabe als Trainingsdatenerfassungsbefehl zu empfangen und an die Trainingsdatenerfassungseinheit zu kommunizieren.

Der Nutzer kann über die Benutzereingabe die Auswahl der Trainingsdaten für das neuronale Netz beeinflussen. Als Benutzerschnittstelle steht beispielsweise eine Tastatur, eine berührungsempfindliche Oberfläche (Touchscreen) oder auch eine Sprachsteuerung bereit. Der Nutzer kann auf unerwartete Fehlfunktionen bei der Detektion durch das neuronale Netz, welche anhand der Objektmarkierungen sichtbar werden, reagieren. Beispielsweise ist der Objektmarkierung zu entnehmen, dass ein Zielobjekt, beispielsweise ein Mittelklotz einer Palette, oder die Palettenfront als Ganzes nicht an der richtigen Stelle erkannt wird. Der Nutzer kann ferner feststellen, ob die Objektmarkierung, also beispielsweise der Umriss einer Palettenfront, so wie er in den 2D-Bilddaten dargestellt wird, instabil ist oder mit schwankender oder fehlerhafter Position angezeigt wird. Solche Ereignisse können ein Hinweis an den Benutzer sein, die entsprechende Bildsequenz als Trainingsdaten zu erfassen, um zukünftig die beobachtete Fehlfunktion des neuronalen Netzes durch entsprechendes Nachtrainieren desselben auszuschließen.

Auch könnte der Nutzer feststellen, dass ein Zielobjekt, obwohl dieses in den 2D-Bilddaten vorhanden ist, nicht erkannt wird. Auch in einem solchen Fall signalisiert der Nutzer die Fehlfunktion des neuronalen Netzes durch eine entsprechende Benutzereingabe. Das aktuelle Bild, eine Bildfolge oder eine Videosequenz vorgegebener Länge, die beispielsweise in einem entsprechend geeigneten Speicher (Ringbuffer) gespeichert ist, kann als Trainingsdaten für das neuronale Netz gespeichert werden.

Gemäß einer weiteren Ausführungsform ist das Flurförderzeug dadurch fortgebildet, dass in der Lasterkennungseinheit ein neuronales Netz implementiert ist und die Lasterkennungseinheit dazu eingerichtet ist, die 2D-Bilddaten dem neuronalen Netz als Eingangsdaten zuzuführen, wobei das neuronale Netz ferner darauf trainiert ist, in den 2D-Bilddaten ein unbekanntes Objekt zu erkennen und in den 2D-Bilddaten mit einer Objektmarkierung zu markieren, wobei
- die Lasterkennungseinheit ferner dazu eingerichtet ist, in Reaktion auf die Erkennung des unbekannten Objekts den Trainingsdatenerfassungsbefehl zu erzeugen und der Trainingsdatenerfassungseinheit zu kommunizieren.

Alternativ zu der zuvor genannten manuellen Erzeugung des Trainingsdatenerfassungsbefehls kann der Trainingsdatenerfassungsbefehl auch automatisch erzeugt werden. Gemäß der genannten Ausführungsform erfolgt dies in einer Situation, in der in den 2D-Bilddaten ein unbekanntes Objekt von dem neuronalen Netz erkannt wird. Die auf diese Weise erzeugten Trainingsdaten können einer Nachbearbeitung unterzogen werden. Bei der Nachbearbeitung der Trainingsdaten kann entschieden werden, ob es sich bei dem unbekannten Objekt tatsächlich um ein Objekt handelt, welches das neuronale Netz hätte erkennen sollen oder auch nicht. Die erfassten Daten stellen eine wertvolle Erweiterung des Trainingsdatensatzes dar.

Diese Ausführungsform kann ferner dadurch fortgebildet sein, dass in der Lasterkennungseinheit ein weiteres neuronales Netz implementiert ist, welches darauf trainiert ist, das unbekannte Objekt einer Objektklasse zuzuordnen, wobei
- die Lasterkennungseinheit ferner dazu eingerichtet ist, die Objektmarkierung und die Objektklasse der Trainingsdatenerfassungseinheit zu kommunizieren, wobei
- die Trainingsdatenerfassungseinheit dazu eingerichtet ist, die von dem 2D-Kamerasystem erfassten 2D-Bilddaten gemeinsam mit der Objektmarkierung und der Objektklasse des unbekannten Objekts als Trainingsdaten für das neuronale Netz zu speichern.

Ein bislang unbekanntes Objekt kann also als solches angezeigt werden und die zugehörigen 2D-Bilddaten zum Training vorgemerkt werden. Gemäß der genannten Ausführungsform kann zusätzlich eine Vorgabe oder ein Vorschlag einer Objektklasse für das bisher unbekannte Objekt erfolgen. Dies kann beispielsweise durch die Vergabe eines Objektnamens erfolgen. Es können ebenso Vorschläge aus einer Bibliothek von vorhandenen Objekten unterschiedlicher Klassen ausgewählt werden.

Gemäß einer Weiterbildung dieses Ausführungsbeispiels ist das Flurförderzeug ferner fortgebildet durch eine Anzeige zur Ausgabe der 2D-Bilddaten und eine Benutzerschnittstelle zum Empfang von Benutzereingaben, wobei
- die Lasterkennungseinheit ferner dazu eingerichtet ist, eine Position des unbekannten Objekts in den 2D-Bilddaten mit einer Objektmarkierung zu markieren und die Objektmarkierung gemeinsam mit der Objektklasse und den 2D-Bilddaten auf der Anzeige auszugeben, wobei
- die Benutzerschnittstelle dazu eingerichtet ist, in Reaktion auf die Ausgabe der 2D-Bilddaten mit der Objektmarkierung und der Objektklasse auf der Anzeige eine Benutzereingabe als Trainingsdatenerfassungsbefehl zu empfangen, wobei die Benutzereingabe ferner eine Bestätigung der Objektklasse oder Informationen zu einer alternativen Objektklasse umfasst.

Der Benutzer kann den Klassenvorschlag des weiteren neuronalen Netzes bestätigen, verwerfen oder eine eigene Klasse für das entsprechende Objekt eingeben. Auf diese Weise kann die Qualität der Trainingsdaten noch weiter verbessert werden. Das neuronale Netz wird auf der Grundlage solcher Trainingsdaten befähigt, bisher nicht erkannte Objekte, wie sie im praktischen Betrieb des Flurförderzeugs jedoch auftauchen und nach Möglichkeit auch erkannt werden sollen, zu erkennen.

Gemäß einer weiteren Ausführungsform kann das Flurförderzeug ferner dadurch fortgebildet sein, dass die Lasterkennungseinheit mit einer Fahrzeugsteuerung des Flurförderzeugs datentechnisch gekoppelt und dazu eingerichtet ist, anhand von Betriebsdaten des Flurförderzeugs aus der Fahrzeugsteuerung eine Umschlagsequenz der Last zu erkennen und in Reaktion auf die Erkennung der Umschlagsequenz den Trainingsdatenerfassungsbefehl zu erzeugen und an die Trainingsdatenerfassungseinheit zu kommunizieren.

Aus der Fahrzeugsteuerung können beispielsweise über das Bussystem des Flurförderzeugs eine Vielzahl von Betriebsdaten ausgelesen werden. Beispielsweise können Betriebsdaten ausgelesen werden, aus denen sich Hubbewegungen des Lastaufnahmemittels oder des Hubmastes ableiten lassen. Es können Parameter als Betriebsdaten aus der Fahrzeugsteuerung ausgelesen werden, die auf Fahrfunktionen oder Fahrbewegungen des Flurförderzeugs hinweisen. Es können ferner, beispielsweise aus dem hydraulischen System des Flurförderzeugs, Parameter erfasst werden, aus denen sich direkt oder indirekt ein Gewicht der mit dem Lastaufnahmemittel aufgenommenen Last ableitet oder ergibt.

Eine Umschlagsequenz besteht typischerweise aus einer Anfahrt, dem Aufnehmen und Anheben einer Last, deren Transport an einen anderen Ort und dem dortigen Absetzen der Last. Durch Auswertung der oben genannten Daten oder eines Teils dieser Daten können solche Umschlagsequenzen, beispielsweise die Ein- oder Auslagerung von Lasten, erkannt werden. Auch eine charakteristische Bewegungssequenz, beispielsweise bestimmte Fahrbewegungen des Flurförderzeugs, deutet auf einen Ein- und Auslagervorgang und damit auf eine Umschlagsequenz hin. Ebenso ist es möglich, eine Umschlagsequenz anhand einer Differenz des Lastgewichts festzustellen.

Wird während einer Umschlagsequenz kein Zielobjekt an einer entsprechenden Position erkannt, kann dies als Kriterium für eine Fehlfunktion des neuronalen Netzes gewertet werden. Die entsprechend während der Umschlagsequenz aufgenommenen 2D-Bilddaten können zum Nachtrainieren des neuronalen Netzes als Trainingsdaten vorgemerkt werden. Auf diese Weise kann der Trainingsdatensatz des neuronalen Netzes um wertvolle Bildinformationen erweitert werden.

Gemäß einer vorteilhaften Weiterbildung ist ferner vorgesehen, dass die Lasterkennungseinheit ferner dazu eingerichtet ist, in der Umschlagsequenz einen Zeitpunkt der Lastaufnahme und/oder der Lastablage zu bestimmen und gemeinsam mit dem Trainingsdatenerfassungsbefehl der Trainingsdatenerfassungseinheit einen Zielbereich des zumindest einen Teils des Lasttransporthilfsmittels zu kommunizieren, der daraus abgeleitet wird, dass in den 2D-Bilddaten zum Zeitpunkt der Lastaufnahme und/oder der Lastablage das Lasttransporthilfsmittel mittig auf dem Lastaufnahmemittel angeordnet ist.

Erfolgt die Auswahl der Trainingsdaten über die Erkennung einer Umschlagsequenz, so kann implizit davon ausgegangen werden, dass sich zum Zeitpunkt der Lastaufnahme und der Lastablage das Lasttransporthilfsmittel, beispielsweise eine Palette, mittig auf dem Lastaufnahmemittel, beispielsweise auf der Lastgabel, befindet. Ferner kann implizit davon ausgegangen werden, dass das Lasttransporthilfsmittel am Gabelrücken platziert ist. Mit anderen Worten befindet sich das Lastaufnahmehilfsmittel während der Lastaufnahme und Lastablage an einem definierten Ort. **In** Kenntnis der intrinsischen und extrinsischen Kameraparameter des 2D-Kamerasystems kann diese Information dazu genutzt werden, auf einen Zielbereich zu schließen, in dem sich der zu erkennende Teil des Lastaufnahmetransporthilfsmittels, also beispielsweise ein Mittelklotz einer Palette, befinden sollte. Die erwartete Position dieses Objektes in den 2D-Bilddaten kann für die Erzeugung von Trainingsdaten als zusätzliche Information genutzt werden. Gleichzeitig kann eine maximale Szenenvarianz und somit Trainingsdatenvarianz erzeugt werden.

Gemäß einer weiteren Ausführungsform ist das Flurförderzeug ferner dadurch fortgebildet, dass die Lasterkennungseinheit ferner dazu eingerichtet ist, anhand von Betriebsdaten des Flurförderzeugs aus der Fahrzeugsteuerung auf eine Bewegung des Flurförderzeugs in einem Zeitintervall umfassend die Umschlagsequenz zurückzurechnen und eine Bewegung des Flurförderzeugs in dem Zeitintervall kennzeichnende Bewegungsdaten gemeinsam mit dem Trainingsdatenerfassungsbefehl der Trainingsdatenerfassungseinheit zu kommunizieren.

Ausgehend von der Erkennung einer Umschlagsequenz kann ferner aus den Betriebsdaten des Flurföderzeugs auf eine Eigenbewegung des 2D-Kamerasystems geschlossen werden. Aus den Bewegungsdaten des Flurförderzeugs kann auf die Eigenbewegung der Kamera zurückgerechnet werden, wobei ferner beispielsweise Parameter der Fahr- und Hydraulikfunktionen des Flurförderzeugs berücksichtigt werden. Ausgehend von dem Zeitpunkt der Lastaufnahme und Lastablage kann somit wiederum in Kenntnis der intrinsischen und extrinsischen Kameraparameter auf die Position des Lastaufnahmemittels in den 2D-Bilddaten zurückgerechnet und vorausberechnet werden.

Diese Information kann den Trainingsdaten in Form von Bewegungsdaten hinzugefügt werden. Die genannte Auswertung der Betriebsdaten des Flurförderzeugs und die Umrechnung der Betriebsdaten in eine erwartete Position des zu erkennenden Objekts kann in der Lasterkennungseinheit oder auch in einer dritten Einheit bei der späteren Auswertung der Trainingsdaten erfolgen. Da die Auswertung der Daten mitunter eine gewisse Rechenkapazität beansprucht, die beispielsweise im Betrieb des Flurförderzeugs nicht bereitsteht, können die entsprechenden Rohdaten von der Lasterkennungseinheit auf dem Flurförderzeug gespeichert werden. Diese werden zur späteren Verarbeitung in einer dritten Einheit über eine drahtlose oder drahtgebundene Datenverbindung an diese übertragen.

Gemäß einer weiteren Ausführungsform ist das Flurförderzeug ferner dadurch fortgebildet, dass die Lasterkennungseinheit dazu eingerichtet ist, den zumindest einen Teil des Lasttransporthilfsmittels im Lastaufnahmebereich unter Anwendung eines Erkennungsschwellenwerts zu detektieren, wobei die Lasterkennungseinheit ferner dazu eingerichtet ist, in den 2D-Bilddaten aus einem Zeitintervall umfassend die Umschlagsequenz, eine Erkennung des zumindest einen Teil des Lasttransporthilfsmittels mit unterschiedlichen Erkennungsschwellenwerten durchzuführen und im Fall einer erfolgreichen Erkennung die 2D-Bilddaten gemeinsam mit dem Schwellenwert, für den die Erkennung erfolgreich war, der Trainingsdatenerfassungseinheit als Trainingsdaten für das neuronale Netz zu kommunizieren.

Die Erkennung zumindest eines Teils des Lastaufnahmemittels kann unter Berücksichtigung oder Verwendung eines Erkennungsschwellenwerts erfolgen. Dies betrifft sowohl die Erkennung des zumindest einen Teils des Lastaufnahmemittels durch das neuronale Netz als auch die Erkennung unter Einsatz anderer technischer Mittel, also insbesondere unter Verzicht auf ein neuronales Netz, beispielsweise mittels Bilderkennung. Wird eine Umschlagsequenz erkannt, wobei in den zugehörigen 2D-Bilddaten kein Lastaufnahmemittel erkannt wird, so kann dies als Hinweis darauf gewertet werden, dass der verwendete Erkennungsschwellenwert zu hoch angesetzt ist. Die 2D-Bilddaten können in einem solchen Fall erneut analysiert werden, jedoch mit geringerem Erkennungsschwellenwert. Dieser Vorgang kann iterativ wiederholt werden, bis in den 2D-Bilddaten ein Objekt erkannt wird. Für das entsprechende Anwendungsszenario ist dann der passende Erkennungsschwellenwert gefunden. Das Risiko für eine falsch positive Erkennung ist in einem solchen Fall gering. Aufgrund der Tatsache, dass eine Umschlagsequenz stattgefunden hat, ist in den 2D-Bilddaten nämlich tatsächlich ein zur Erkennung vorgesehenes Objekt vorhanden. Eine solche Analyse der 2D-Bilddaten kann direkt in der Lasterkennungseinheit des Flurförderzeugs durchgeführt werden. Alternativ können die entsprechenden Daten auch auf eine dritte Einheit über eine drahtlose oder drahtgebundene Datenverbindung übertragen werden, wobei die Lasterkennungseinheit lediglich die hierzu erforderlichen Rohdaten sammelt und speichert. Die eigentliche Analyse der 2D-Bilddaten findet außerhalb des Flurförderzeugs auf einer weiteren Einheit statt. Die weitere Einheit kann ein weiterer Computer, eine Workstation oder ein Cloudservice sein.

Gemäß einer weiteren Ausführungsform ist das Flurförderzeug dadurch fortgebildet, dass die Lasterkennungseinheit dazu eingerichtet ist, den zumindest einen Teil des Lasttransporthilfsmittels auf der Grundlage von Umfelddaten zu detektieren, die von den 2D-Bilddaten verschieden sind, wobei die Umfelddaten des Lastaufnahmebereichs räumlich umfassende Daten aus zumindest einer der folgenden Gruppe sind:
a) 3D-Daten eines 3D-Kamerasystems,
b) 3D-Daten eines Lichttasteraggregats,
c) Betriebsdaten einer Ablaufsteuerung des Flurförderzeugs.

Gemäß dieser Ausführungsform erfolgt die Detektion des Lasttransporthilfsmittels über ein weiteres System. Beispielsweise erfolgt die Detektion einer Palettenposition über eine Time-of-flight 3D-Kamera des 3D-Kamerasystems. Auch kann ein Lichttasteraggregat, welches ebenso 3D-Daten erzeugt, zur Detektion des Lasttransporthilfsmittels oder eines Teils davon eingesetzt werden. Auch aus den Betriebsdaten einer Ablaufsteuerung des Flurförderzeugs, aus der sich beispielsweise Informationen über eine Palettenposition bereitstellen lassen, kann die Position des Ladetransporthilfsmittels oder eines Teils davon erfolgen. So kann aus den Daten der Ablaufsteuerung über eine Transformation der Signale und Daten der bordinternen Sensorik eine Position des zu erkennenden Teils des Ladetransporthilfsmittels abgeleitet werden. Beispielsweise ist die Position des Ladetransporthilfsmittels in einem Regal bekannt, diese Daten sind in der Ablaufsteuerung des Flurförderzeugs vorhanden. Lässt sich aus den bord-internen Parametern eine Umschlagsequenz erkennen, können die entsprechenden bordinternen Parameter des Flurförderzeugs mit den externen Parametern aus der Ablaufsteuerung des Flurförderzeugs verknüpft werden, woraus sich eine Position des Lasttransporthilfsmittels gewinnen lässt. Auf diese Weise kann wiederum die Erkennung des zumindest einen Teils des Lasttransporthilfsmittels erreicht werden. Es kann anhand der beschriebenen Erkennung, ggf. in Kombination mit einem manuell oder automatisch erzeugten Trainingsdatenerfassungsbefehl, eine zusätzliche Information in den Trainingsdaten bereitgestellt werden, welche die Position des relevanten Teils des Lasttransporthilfsmittels betrifft.

Gemäß einer weiteren vorteilhaften Ausführungsform ist ferner das Flurförderzeug dadurch fortgebildet, dass
- die Trainingsdatenerfassungseinheit ferner dazu eingerichtet ist, die Trainingsdaten über eine drahtlose Datenverbindung oder eine drahtgebundene Datenverbindung, welche insbesondere über ein Ladegerät verläuft, an eine weitere Datenverarbeitungseinheit zu kommunizieren und/oder
- die Trainingsdatenerfassungseinheit ferner dazu eingerichtet ist, aktualisierte Daten des neuronalen Netzes über eine drahtlose Datenverbindung oder eine drahtgebundene Datenverbindung, welche insbesondere über ein Ladegerät verläuft, zu empfangen.

Die Datenübertragung während eines Ladevorgangs ist besonders vorteilhaft, da das Flurförderzeug während des Ladevorgangs für einen bestimmten Zeitraum am Ladegerät verweilt und somit eine Datenübertragung stattfinden kann, auch wenn hierzu keine besonders große Bandbreite zur Verfügung steht. Eine drahtlose Datenübertragung erfolgt beispielsweise über eine Funkverbindung, wie zum Beispiel WLAN, 3G, 4G LTE, 5G oder andere Standards. Die Trainingsdatenerfassungseinheit ist, wie bereits erwähnt, dazu eingerichtet, die erforderlichen Daten lokal zumindest zwischenzuspeichern, bis ein entsprechendes Datennetzwerk verfügbar ist, über welches die erfassten Daten an eine weitere Einheit übertragen werden können.

In den erfassten Bilddaten ist das Lasttransporthilfsmittel oder zumindest ein oder mehrere Teile davon dargestellt. Zum Training des neuronalen Netzes müssen diese Bilddaten um Informationen ergänzt werden, wo sich in welchen Bildern welche Objekttypen befinden. Informationen hierzu sind in den Trainingsdaten, wie oben erwähnt, bereits teilweise oder auch vollständig vorhanden. Eine Aufbereitung der Daten für das konkrete Training des neuronalen Netzes kann so wesentlich verbessert und vereinfacht werden. Die konkreten Trainingsdaten für das neuronale Netz können beispielsweise im PyTorch-Format bereitgestellt werden. Eine manuelle Objektmarkierung (Labelling) kann beispielsweise durch einen externen Dienstleister erfolgen oder es können unter Anwendung synthetisch modellierter Umgebungen solche Markierungen den Trainingsdaten hinzugefügt werden. Auch kann eine Analyse der 2D-Bilddaten mit einem ggf. nicht aufwändiger modellierten und daher nicht echtzeitfähigen neuronalen Netz, welches eine höhere Genauigkeit bei der Erkennung des zumindest einen Teils des Lasttransporthilfsmittels erreicht, ergänzt werden. Die Trainingsdaten können mit einem solchen nicht echtzeit-fähigen neuronalen Netz mit Objektmarkierungen versehen werden. Die entsprechend aufbereiteten Daten dienen als Trainingsbasis für das neuronale Netz, wie es im Flurförderzeug eingesetzt wird.

Das neuronale Netz kann neu trainiert oder nachtrainiert werden. Basierend auf dem Training des neuronalen Netzes können die neu trainierten Gewichte für den entsprechenden Netztyp in die Recheneinheit des Flurförderzeugs zurückgespielt werden. Dies kann während der Laufzeit des neuronalen Netzes, beispielsweise über eine drahtlose Datenverbindung (WLAN, 3G, 4G, LTE, 5G oder auch andere) erfolgen. Ebenso kann das aktualisierte neuronale Netz von einem Servicetechniker auf das Flurförderzeug übertragen werden. Wiederum kann vorteilhaft vorgesehen sein, dass eine solche Datenübertragung automatisch während eines Ladevorgangs erfolgt.

Die Aufgabe wird ferner gelöst durch ein Verfahren zum Betreiben eines Flurförderzeugs mit einem Lastaufnahmemittel und einem 2D-Kamerasystem, wobei
- mit dem Lastaufnahmemittel eine auf einem Lasttransporthilfsmittel vorhandene Last aufgenommen wird,
- mit dem 2D-Kamerasystem ein Lastaufnahmebereich aufgenommen wird, der sich vor dem Lastaufnahmemittel in einer Lastaufnahmerichtung erstreckt,
wobei dieses Verfahren dadurch fortgebildet ist, dass
- das Flurförderzeug ferner eine Lasterkennungseinheit umfasst, mit der zumindest ein Teil des Lasttransporthilfsmittels im Lastaufnahmebereich detektiert wird, wobei
- die Trainingsdatenerfassungseinheit einen Trainingsdatenerfassungsbefehl empfängt und in Reaktion darauf von dem 2D-Kamerasystem erfasste 2D-Bilddaten als Trainingsdaten für ein neuronales Netz speichert.

Auf das Verfahren zum Betreiben des Flurförderzeugs treffen gleiche oder ähnliche Vorteile und Weiterbildungsmöglichkeiten zu, wie sie bereits im Hinblick auf das Flurförderzeug selbst zuvor erwähnt wurden, so dass auf Wiederholungen verzichtet werden soll.

Mit der Lasterkennungseinheit kann das Vorhandensein des Lasttransporthilfsmittels an die ferner von dem Flurförderzeug umfasste Trainingsdatenerfassungseinheit kommuniziert werden.

Das Verfahren ist gemäß einer weiteren vorteilhaften Ausführungsform dadurch fortgebildet, dass das Flurförderzeug ferner eine Anzeige aufweist, auf der die 2D-Bilddaten angezeigt werden und das Flurförderzeug ferner eine Benutzerschnittstelle aufweist, über die Benutzereingaben empfangen werden, wobei
- in der Lasterkennungseinheit ein neuronales Netz implementiert ist und die Lasterkennungseinheit die 2D-Bilddaten dem neuronalen Netz als Eingangsdaten zuführt, wobei das neuronale Netz darauf trainiert ist, in den 2D-Bilddaten zumindest einen Teil des Transporthilfsmittels als Objekt zu erkennen und die Lasterkennungseinheit ferner eine Position des erkannten Objekts in den 2D-Bilddaten mit einer Objektmarkierung markiert und die Objektmarkierung gemeinsam mit den 2D-Bilddaten auf der Anzeige ausgibt, wobei
- an der Benutzerschnittstelle in Reaktion auf die Ausgabe der 2D-Bilddaten mit der Objektmarkierung auf der Anzeige eine Benutzereingabe als Trainingsdatenerfassungsbefehl empfangen und an die Trainingsdatenerfassungseinheit kommuniziert wird.

Das Verfahren ist gemäß einer weiteren vorteilhaften Ausführungsform dadurch fortgebildet, dass in der Lasterkennungseinheit ein neuronales Netz implementiert ist und die Lasterkennungseinheit die 2D-Bilddaten dem neuronalen Netz als Eingangsdaten zuführt, wobei das neuronale Netz ferner darauf trainiert ist, in den 2D-Bilddaten ein unbekanntes Objekt zu erkennen und in den 2D-Bilddaten mit einer Objektmarkierung zu markieren, wobei
- die Lasterkennungseinheit ferner in Reaktion auf die Erkennung des unbekannten Objekts den Trainingsdatenerfassungsbefehl erzeugt und an die Trainingsdatenerfassungseinheit kommuniziert.

Das Verfahren ist gemäß einer weiteren vorteilhaften Ausführungsform dadurch fortgebildet, dass in der Lasterkennungseinheit ein weiteres neuronales Netz implementiert ist, welches darauf trainiert ist, das unbekannte Objekt einer Objektklasse zuzuordnen, wobei
- die Lasterkennungseinheit ferner die Objektmarkierung und die Objektklasse der Trainingsdatenerfassungseinheit kommuniziert, wobei
- die Trainingsdatenerfassungseinheit die von dem 2D-Kamerasystem erfassten 2D-Bilddaten gemeinsam mit der Objektmarkierung und der Objektklasse des unbekannten Objekts als Trainingsdaten für das neuronale Netz speichert.

Das Verfahren ist gemäß einer weiteren vorteilhaften Ausführungsform dadurch fortgebildet, dass das Flurförderzeug ferner eine Anzeige zur Ausgabe der 2D-Bilddaten und eine Benutzerschnittstelle zum Empfang von Benutzereingaben umfasst, wobei
- die Lasterkennungseinheit ferner eine Position des unbekannten Objekts in den 2D-Bilddaten mit einer Objektmarkierung markiert und die Objektmarkierung gemeinsam mit der Objektklasse und den 2D-Bilddaten auf der Anzeige ausgibt, wobei
- die Benutzerschnittstelle in Reaktion auf die Ausgabe der 2D-Bilddaten mit der Objektmarkierung und der Objektklasse auf der Anzeige eine Benutzereingabe als Trainingsdatenerfassungsbefehl empfängt, wobei
- die Benutzereingabe ferner eine Bestätigung der Objektklasse oder Informationen zu einer alternativen Objektklasse umfasst.

Das Verfahren ist gemäß einer weiteren vorteilhaften Ausführungsform dadurch fortgebildet, dass die Lasterkennungseinheit mit einer Fahrzeugsteuerung des Flurförderzeugs datentechnisch gekoppelt ist und anhand von Betriebsdaten des Flurförderzeugs aus der Fahrzeugsteuerung eine Umschlagsequenz der Last erkennt und in Reaktion auf die Erkennung der Umschlagsequenz den Trainingsdatenerfassungsbefehl erzeugt und an die Trainingsdatenerfassungseinheit kommuniziert.

Das Verfahren ist gemäß einer weiteren vorteilhaften Ausführungsform dadurch fortgebildet, dass die Lasterkennungseinheit ferner in der Umschlagsequenz einen Zeitpunkt der Lastaufnahme und/oder der Lastablage bestimmt und gemeinsam mit dem Trainingsdatenerfassungsbefehl der Trainingsdatenerfassungseinheit einen Zielbereich des zumindest einen Teils des Lasttransporthilfsmittels kommuniziert, der daraus abgeleitet wird, dass in der 2D-Bilddaten zum Zeitpunkt der Lastaufnahme und/oder der Lastablage das Lasttransporthilfsmittel mittig auf dem Lastaufnahmemittel angeordnet ist.

Das Verfahren ist gemäß einer weiteren vorteilhaften Ausführungsform dadurch fortgebildet, dass die Lasterkennungseinheit anhand von Betriebsdaten des Flurförderzeugs aus der Fahrzeugsteuerung auf eine Bewegung des Flurförderzeugs in einem Zeitintervall umfassend die Umschlagsequenz zurückrechnet und eine Bewegung des Flurförderzeugs in dem Zeitintervall kennzeichnende Bewegungsdaten gemeinsam mit dem Trainingsdatenerfassungsbefehl der Trainingsdatenerfassungseinheit kommuniziert.

Das Verfahren ist gemäß einer weiteren vorteilhaften Ausführungsform dadurch fortgebildet, dass die Lasterkennungseinheit den zumindest einen Teil des Lasttransporthilfsmittels im Lastaufnahmebereich unter Anwendung eines Erkennungsschwellenwerts detektiert, wobei die Lasterkennungseinheit ferner die 2D-Bilddaten aus einem Zeitintervall umfassend die Umschlagsequenz analysiert und eine Erkennung des zumindest einen Teils des Lasttransporthilfsmittels mit unterschiedlichen Erkennungsschwellenwerten durchführt, wobei im Fall einer erfolgreichen Erkennung die 2D-Bilddaten gemeinsam mit dem Schwellenwert, für den die Erkennung erfolgreich war, an die Trainingsdatenerfassungseinheit als Trainingsdaten für das neuronale Netz kommuniziert werden.

Das Verfahren ist gemäß einer weiteren vorteilhaften Ausführungsform dadurch fortgebildet, dass die Lasterkennungseinheit den zumindest einen Teil des Lasttransporthilfsmittels auf der Grundlage von Umfelddaten detektiert, die von den 2D-Bilddaten verschieden sind, wobei die Umfelddaten den Lastaufnahmebereich räumlich umfassende Daten aus zumindest einer der folgenden Gruppe sind:
a) 3D-Daten eines 3D-Kamerasystems,
b) 3D-Daten eines Lichttasteraggregats,
c) Betriebsdaten einer Ablaufsteuerung des Flurförderzeugs.

Das Verfahren ist gemäß einer weiteren vorteilhaften Ausführungsform dadurch fortgebildet, dass
- die Trainingsdatenerfassungseinheit ferner die Trainingsdaten über eine drahtlose Datenverbindung oder eine drahtgebundene Datenverbindung, welche insbesondere über ein Ladegerät verläuft, an eine weitere Datenverarbeitungseinheit kommuniziert und/oder
- die Trainingsdatenerfassungseinheit ferner aktualisierte Daten des neuronalen Netzes über eine drahtlose Datenverbindung oder eine drahtgebundene Datenverbindung, welche insbesondere über ein Ladegerät verläuft, empfängt.

Ferner wird die Aufgabe gelöst durch ein Verfahren zum Trainieren eines neuronalen Netzes, die folgenden Schritte umfassend:
- Bereitstellen von Trainingsdaten durch Ausführung eines Verfahrens zum Betreiben eines Flurförderzeugs gemäß einer oder mehrerer der zuvor genannten Ausführungsformen,
- Hinzufügen oder Bestätigen von Objektmarkierungen (Labelling) in den 2D-Bilddaten und
- Bereitstellen der mit Objektmarkierungen versehenen 2D-Bilddaten als Trainingsdaten für das neuronale Netz,
- Trainieren des neuronalen Netzes auf eine Erkennung des zumindest einen Teils des Lasttransporthilfsmittels in den 2D-Bilddaten.

Das Hinzufügen oder Bestätigen von Objektmarkierungen erfolgt teilweise oder vollständig auf der Grundlage der bereits in den Trainingsdaten vorhandenen zusätzlichen Informationen. Das Hinzufügen oder Bestätigen von Objektmarkierungen kann ebenfalls automatisch oder teilautomatisch, beispielsweise durch Analyse der 2D-Bilddaten in einem genaueren nicht echtzeitfähigen neuronalen Netz oder durch entsprechende Modellierung der Umgebung erfolgen. Es können das Hinzufügen und die Bestätigung von Objektmarkierungen ebenfalls manuell vorgenommen werden.

Die Aufgabe wird ferner gelöst durch ein Verfahren zum Erzeugen von Trainingsdaten für ein neuronales Netz eines Flurförderzeugs, indem das Flurförderzeug in einer Logistikeinrichtung gemäß einem Verfahren zum Betreiben des Flurförderzeugs gemäß einem oder mehreren der zuvor genannten Ausführungsformen betrieben wird.

Vorteilhaft kann mit einem solchen Verfahren ein Trainingsdatensatz erzeugt werden, welcher die Realbedingungen des Betriebs des Flurförderzeugs in einer Logistikeinrichtung widerspiegelt.

Schließlich wird die Aufgabe gelöst durch die Verwendung eines Flurförderzeugs nach einem oder mehreren der zuvor genannten Ausführungsformen zum Erzeugen von Trainingsdaten für ein neuronales Netz des Flurförderzeugs. Auch auf die Verwendung des Flurförderzeugs treffen gleiche oder ähnliche Vorteile zu, wie sie bereits zuvor im Hinblick auf das Flurförderzeug selbst erwähnt wurden, so dass auf Wiederholungen verzichtet werden soll.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine vereinfachte Darstellung eines Flurförderzeugs,
- Fig. 2 a) bis d): jeweils vereinfachte Darstellungen der Wiedergabe einer Anzeige eines Flurförderzeugs und einer manuellen Eingabe über eine Benutzerschnittstelle
- Fig. 3: eine weitere vereinfachte Darstellung der Wiedergabe einer Anzeige, wobei ein unbekanntes Objekt markiert und durch Benutzereingabe eine Klasse dieses unbekannten Objekts ausgewählt wird,
- Fig. 4 a) bis e): eine schematische Darstellung einer Umschlagsequenz,
- Fig. 5: eine vereinfachte Frontalansicht eines Lastaufnahmemittels, welches mit einer 3D-Kamera oder einem Scanner zur Erfassung eines Teils eines Lastaufnahmehilfsmittels versehen ist und
- Fig. 6: eine schematische Illustration einer Datenübertragung zwischen einem Flurförderzeug und einem Ladegerät.

In den Zeichnungen sind jeweils gleiche oder gleichartige Elemente und/oder Teile mit denselben Bezugsziffern versehen, so dass von einer erneuten Vorstellung jeweils abgesehen wird.

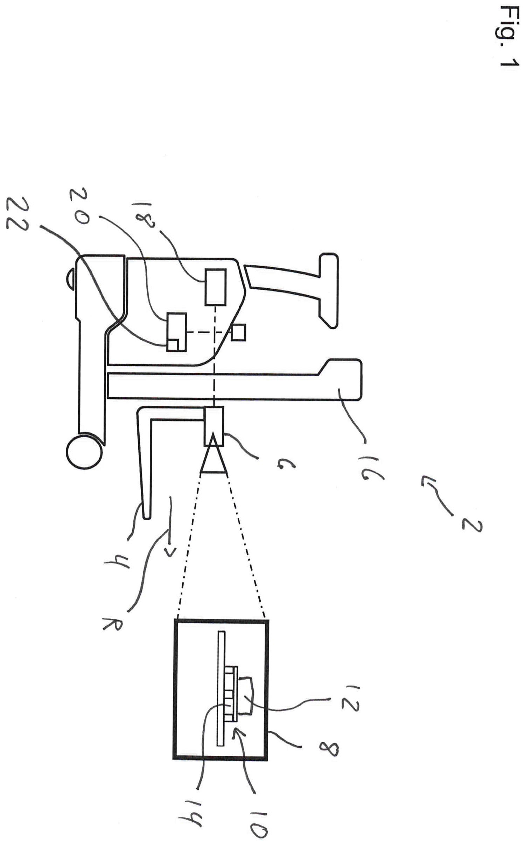

Fig. 1 zeigt eine vereinfachte Darstellung eines Flurförderzeugs 2 mit einem Lastaufnahmemittel 4, welches beispielhaft als Lastgabel ausgeführt ist. Ferner umfasst das Flurförderzeug 2 ein 2D-Kamerasystem 6, welches beispielhaft und schematisch als Kamera dargestellt ist. Ebenfalls schematisch dargestellt sind von dem 2D-Kamerasystem 6 erfasste 2D-Bilddaten 8, in denen ein Lasttransporthilfsmittel 10, bei dem es sich beispielhaft um eine Palette handelt, dargestellt ist. Auf dem Lasttransporthilfsmittel 10 befindet sich eine schematisch dargestellte Last 12. Das Lastaufnahmemittel 4 ist zur Aufnahme des Lasttransporthilfsmittels 10 eingerichtet. Beispielsweise werden die Gabelzinken in die Palettentaschen 14 eingeschoben. Das 2D-Kamerasystem 6 ist zur Erfassung eines Lastaufnahmebereichs eingerichtet, der in etwa dem dargestellten Ausschnitt der 2D-Bilddaten 8 entspricht. Der Lastaufnahmebereich erstreckt sich vor dem Lastaufnahmemittel 4 in eine Lastaufnahmerichtung R, also in eine Richtung, in der der Paletteneinstich erfolgt.

Lediglich beispielhaft ist in Fig. 1 als Flurförderzeug 2 ein Schubmaststapler dargestellt. Das Lastaufnahmemittel 4 in Form der Lastgabel ist an einem Hub-/Schubmast 16 angebracht und kann in der Höhe verfahren werden. Gleichzeitig kann der Schubmast 16 gemeinsam mit dem Lastaufnahmemittel 4 in eine Lastaufnahmerichtung R verschoben werden. Weitere Details des Flurförderzeugs 2 sind allgemein bekannt und sollen daher nicht beschrieben werden.

Das Flurförderzeug 2 weist eine Lasterkennungseinheit 18 auf, die dazu eingerichtet ist, zumindest einen Teil des Lasttransporthilfsmittels 10 im Lastaufnahmebereich zu detektieren. Beispielsweise ist die Lasterkennungseinheit 18 dazu eingerichtet, eine Palettenfront, einen Mittelklotz der Palette oder eine oder mehrere Palettentaschen 14 zu erkennen. Erkennt die Lasterkennungseinheit 18 zumindest einen solchen Teil des Lasttransporthilfsmittels 10, kommuniziert sie einer Trainingsdatenerfassungseinheit 20 dieses Ereignis. Die Trainingsdatenerfassungseinheit 20 ist dazu eingerichtet, einen Trainingsdatenerfassungsbefehl zu empfangen. In Reaktion auf den Trainingsdatenerfassungsbefehl speichert die Trainingsdatenerfassungseinheit 20 von dem 2D-Kamerasystem 6 erfasste 2D-Bilddaten 8 als Trainingsdaten für ein neuronales Netz. Zu diesem Zweck weist die Trainingsdatenerfassungseinheit 20 einen geeigneten Datenspeicher 22 auf.

Das Flurförderzeug 2 kann ferner mit einer Anzeige 24 zur Ausgabe der 2D-Bilddaten 8 und mit einer Benutzerschnittstelle 26 zum Empfang von Benutzereingaben versehen sein. In Fig. 1 sind die Anzeige 24 und die Benutzerschnittstelle 26 nicht dargestellt.

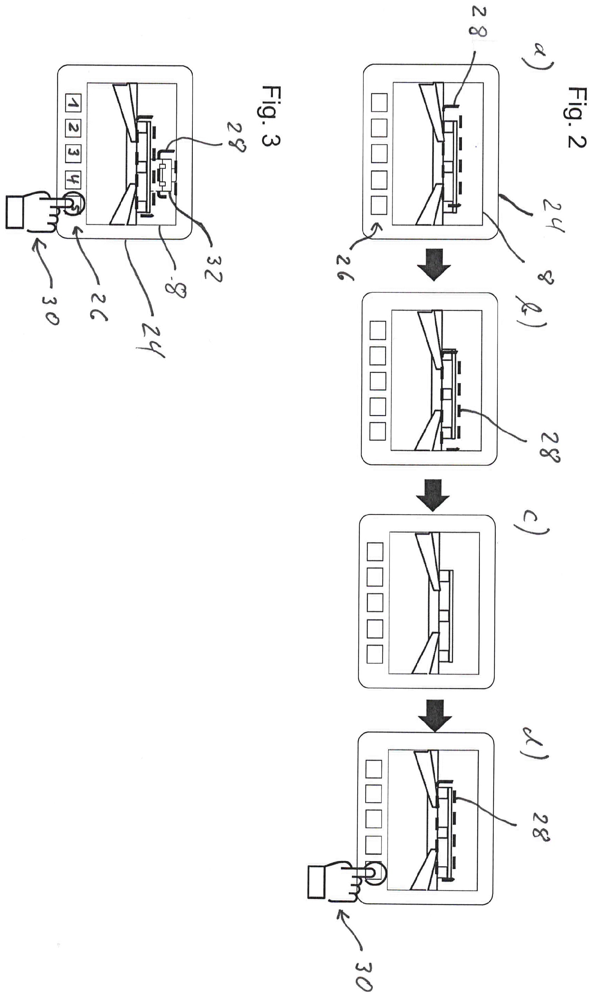

Fig. 2 a) bis d) zeigen jeweils vereinfachte Darstellungen der Anzeige 24, auf der die im Lastaufnahmebereich erfassten 2D-Bilddaten 8 ausgegeben werden. Beispielhaft weist die Anzeige 24 im unteren Bereich eine Benutzerschnittstelle 26 in Form verschiedener Tasten auf, die als Softbuttons ausgestaltet sein können, wenn es sich bei der Anzeige 24 um eine berührungsempfindliche Anzeige handelt.

In der Lasterkennungseinheit 18 ist gemäß einem Ausführungsbeispiel ein neuronales Netz implementiert, durch welches die Lasterkennungseinheit 18 dazu ausgestaltet und eingerichtet ist, in den 2D-Bilddaten 8 zumindest einen Teil des Lasttransporthilfsmittels 10 als Objekt zu erkennen. Die Lasterkennungseinheit 18 führt dem neuronalen Netz die 2D-Bilddaten 8 als Eingangsdaten zu. Das neuronale Netz kann darauf trainiert sein, als Objekt eine Palettenfront, einen Mittelklotz der Palette und/oder eine Palettentasche 14 zu erkennen. Beispielhaft soll das neuronale Netz darauf trainiert sein, die Palettenfront zu erkennen.

Die Lasterkennungseinheit 18 ist somit dazu eingerichtet, eine Position des erkannten Objekts, in diesem Fall die Palettenfront in den 2D-Bilddaten 8, mit einer entsprechenden Objektmarkierung 28, welche in der Darstellung von Fig. 2 mit gestrichelter Linie dargestellt ist, zu markieren. Die Objektmarkierung 28 wird gemeinsam mit den 2D-Bilddaten 8 auf der Anzeige 24 ausgegeben.

Der Benutzer des Flurförderzeugs 2 nimmt die auf der Anzeige 24 dargestellten 2D-Bilddaten einschließlich der Markierung 28 wahr und reagiert auf diese mit einer entsprechenden Benutzereingabe 30. Die Benutzereingabe 30 erfolgt über die Benutzerschnittstelle 26 und ist schematisch in Fig. 2d) dargestellt.

Die Benutzereingabe 30 stellt in diesem Fall den Trainingsdatenerfassungsbefehl dar, der die Trainingsdatenerfassungseinheit 20 dazu veranlasst, die von dem 2D-Kamerasystem 6 erfassten 2D-Bilddaten 8 als Trainingsdaten für das neuronale Netz in dem Datenspeicher 22 zu speichern.

Wie den Darstellungen der Fig. 2a) bis c) zu entnehmen ist, ist die Objektmarkierung 28 instabil. Eigentlich sollte die Objektmarkierung 28 die Palettenfront des Lasttransporthilfsmittels 10 markieren. In Fig. 2a ist die Objektmarkierung 28 jedoch gegenüber der Palettenfront zu weit links angeordnet. **In** der Darstellung von Fig. 2b) ist die Objektmarkierung 28 zu weit rechts angeordnet. In der Darstellung von Fig. 2c) ist die Objektmarkierung 28 temporär verschwunden, d. h. die Palettenfront wurde zumindest vorübergehend überhaupt nicht erkannt. In der Darstellung von Fig. 2d) ist die Objektmarkierung 28 schließlich korrekt und übereinstimmend mit der Palettenfront angeordnet. Beobachtet der Benutzer ein solches Verhalten der Lasterkennungseinheit 18, kann die Benutzereingabe 30 die Trainingsdatenerfassungseinheit 20 dazu veranlassen, die entsprechende Bildsequenz als Trainingsdaten für das neuronale Netz zu erfassen. Auf der Grundlage dieser 2D-Bilddaten 8 kann das neuronale Netz neu oder nachtrainiert werden. Durch diese Maßnahme kann die Detektion der Palettenfront verbessert werden.

Gemäß einem weiteren Ausführungsbeispiel ist in der Lasterkennungseinheit 18 ein weiteres neuronales Netz implementiert und die Lasterkennungseinheit 18 ist dazu eingerichtet, die 2D-Bilddaten 8 dem weiteren neuronalen Netz als Eingangsdaten zuzuführen. Das weitere neuronale Netz ist darauf trainiert, in den 2D-Bilddaten 8 ein unbekanntes Objekt 32 zu erkennen. Dies ist beispielhaft in Fig. 3 gezeigt.

Das unbekannte Objekt 32 wird ebenfalls mit einer Objektmarkierung 28 markiert. Die Lasterkennungseinheit 18 kann in einem solchen Fall über die Benutzerschnittstelle 26 eine Benutzereingabe 30 als Trainingsdatenerfassungsbefehl erhalten. Ferner kann die Lasterkennungseinheit 18 dazu eingerichtet sein, in Reaktion auf die Erkennung des unbekannten Objekts 32 den Trainingsdatenerfassungsbefehl selbst, d. h. automatisch, zu erzeugen und an die Trainingsdatenerfassungseinheit 20 zu kommunizieren. Wird also mit anderen Worten in den 2D-Bilddaten 8 von dem weiteren neuronalen Netz ein unbekanntes Objekt 32 erfasst, wird automatisch ein Trainingsdatenerfassungsbefehl erzeugt, sodass die zugrunde liegenden 2D-Bilddaten 8 als Trainingsdaten für das neuronale Netz gespeichert werden können.

Das weitere neuronale Netz kann nicht nur darauf trainiert sein, unbekannte Objekte 32 zu erkennen. Es kann ebenso darauf trainiert sein, das unbekannte Objekt 32 einer Objektklasse zuzuordnen. Die Lasterkennungseinheit 18 ist dazu eingerichtet, über die Anzeige 24 eine entsprechende Objektmarkierung 28 und ggf. einen Vorschlag für eine Objektklasse zu kommunizieren oder diese Information direkt an die Trainingsdatenerfassungseinheit 20 übermitteln. In Fig. 3 ist beispielhaft das unbekannte Objekt 32 mit einer Objektmarkierung 28 dargestellt. Über die Softbuttons der Benutzerschnittstelle 26 werden verschiedene Objektklassen, beispielhaft bezeichnet mit 1, 2, 3, 4 und 5 vorgeschlagen. Über eine entsprechende Benutzereingabe 30 kann der Benutzer die vorgeschlagene Objektklasse bestätigen, eine andere Objektklasse auswählen oder eine bisher nicht vorhandene neue Objektklasse erzeugen und auswählen. Die 2D-Bilddaten 8, in denen das unbekannte Objekt 32 erkannt wurde, werden gemeinsam mit der Objektklasse als Trainingsdaten der Trainingsdatenerfassungseinheit 20 übermittelt. So ist es möglich, das neuronale Netz darauf zu trainieren, neue weitere Objekte zu erkennen.

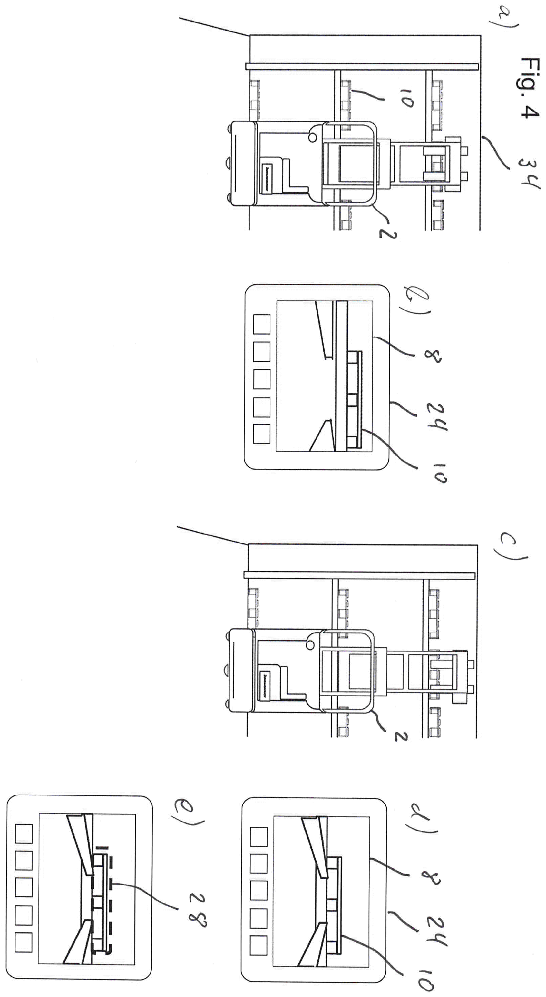

Fig. 4 zeigt ein Flurförderzeug 2 während einer Umschlagsequenz. In Fig. 4a) ist das Flurförderzeug 2 beispielhaft vor einem Regal 34 dargestellt, in dem sich mehrere Paletten als beispielhafte Transporthilfsmittel 10 befinden. Figur 4b) zeigt eine Darstellung der Anzeige 24 des Flurförderzeugs 2 in diesem Zustand. Erkennbar sind die Gabelzinken noch nicht in der korrekten Position, sodass ein Paletteneinstich erfolgen kann. Zu diesem Zweck ist es erforderlich, die Lastgabel seitlich zu verfahren. Fig. 4c) zeigt das Flurförderzeug 2, nachdem die Lastgabel seitlich verfahren wurde. Fig. 4d) zeigt die zugehörige Darstellung des Lastaufnahmebereichs auf der Anzeige 24 des Flurförderzeugs 2. Es kann anschließend ein Paletteneinstich erfolgen. In Fig. 4 ist beispielhaft dargestellt, wie die Palettenfront korrekt erkannt wurde, diese ist nun mit einer entsprechenden Markierung 28 kenntlich gemacht.

Die Lasterkennungseinheit 18 des Flurförderzeugs 2 ist mit einer Fahrzeugsteuerung des Flurförderzeugs, welche in den Figuren nicht dargestellt ist, datentechnisch gekoppelt. Beispielsweise ist die Lasterkennungseinheit 18 an einen Datenbus des Flurförderzeugs 2 datentechnisch angeschlossen. Die Lasterkennungseinheit 18 ist ferner dazu eingerichtet, anhand von Betriebsdaten des Flurförderzeugs 2, die aus der Fahrzeugsteuerung ausgelesen werden, eine Umschlagsequenz der Last 12 zu erkennen. In den Fig. 4a) und 4c) ist das Flurförderzeug 2 während der bzw. kurz vor der Lastaufnahme dargestellt. Nimmt das Flurförderzeug 2 mit dem Lastaufnahmemittel 4 das Lasttransporthilfsmittel 10 auf, kann beispielsweise anhand der internen Betriebsdaten des Hydrauliksystems des Flurförderzeugs 2 festgestellt werden, dass das Lastaufnahmemittel 4 nun mit einer Last 12 belastet ist. Anschließend wird das Flurförderzeug 2 Fahrbewegungen ausführen, um die auf dem Lasttransporthilfsmittel 10 vorhandene Last 12 an einen anderen Ort zu transportieren. Dort wird das Flurförderzeug 2 das Lasttransporthilfsmittel 10 gemeinsam mit der Last 12 auf einem neuen Regalplatz abstellen. Im Moment der Lastablage lässt sich wiederum anhand eines Parameters des Hydrauliksystems des Flurförderzeugs 2 feststellen, dass das Lastaufnahmemittel 4 nun mit einer geringeren Last oder keiner Last mehr belastet ist. Aus der charakteristischen Abfolge der Betriebsparameter oder der Tatsache, dass diese in bestimmten Bereichen liegen, beispielsweise bei der Detektion einer Lasterhöhung im hydraulischen System, anschließenden Fahrbewegungen des Flurförderzeugs 2, welche ebenfalls als Betriebsdaten aus der Fahrzeugsteuerung des Flurförderzeugs 2 erhältlich sind und der anschließend verringerten Last im Hydrauliksystem des Flurförderzeugs 2 lässt sich auf eine Umschlagsequenz schließen. Es sind selbstverständlich weitere charakteristische Parameter oder Parameterabfolgen denkbar, aus denen auf eine solche Umschlagsequenz geschlossen werden kann.

Erkennt das Flurförderzeug 2 eine solche Umschlagsequenz, so erzeugt die Lasterkennungseinheit 18 in Reaktion hierauf einen Trainingsdatenerfassungsbefehl und kommuniziert diesen an die Trainingsdatenerfassungseinheit 20. Die Trainingsdatenerfassungseinheit 20 erfasst die während der Umschlagsequenz von dem 2D-Kamerasystem 6 aufgenommenen 2D-Bilddaten 8, welche teilweise in den Darstellungen der Fig. 4b) und 4e) gezeigt sind. Diese Daten zeichnen sich dadurch aus, dass aufgrund der Tatsache, dass eine Umschlagsequenz stattgefunden hat, die 2D-Bilddaten 8 in jedem Fall das Lasttransporthilfsmittel 10 zeigen. Insofern sind diese 2D-Bilddaten 8 als Trainingsdaten gut geeignet, um ein neuronales Netz, welches zumindest einen Teil des Lasttransporthilfsmittels 10 erkennen soll, zu trainieren.

Die Erkennung einer Umschlagsequenz kann zur Erzeugung zusätzlicher für das Training des neuronalen Netzes hilfreicher Informationen ausgenutzt werden. Beispielsweise kann davon ausgegangen werden, dass sich zum Zeitpunkt der Lastaufnahme und zum Zeitpunkt der Lastablage die Last mittig auf dem Lasttransporthilfsmittel 10 befindet. Mit anderen Worten ist während der Lastaufnahme oder der Lastablage die Palette mittig auf der Lastgabel angeordnet. In Kenntnis der Anordnung des 2D Kamerasystems 6 am Flurförderzeug 2 kann beispielsweise auf die Position des Palettenmittelklotzes oder der Palettentaschen 14 in den 2D-Bilddaten 8 geschlossen werden. Die Lage des Mittelklotzes der Palette oder die Lage der Palettentaschen 14 ist also in den 2D-Bilddaten 8 bekannt, wenn sich die Palette mittig auf der Lastgabel und am Gabelrücken angeschlagen befindet. So kann zum Zeitpunkt der Lastaufnahme oder Lastablage ein Zielbereich in den 2D-Bilddaten 8 definiert werden, in dem sich der zu erkennende Teil des Lasttransporthilfsmittels 10 befindet. Diese Information kann vorteilhaft den Trainingsdaten für das neuronale Netz hinzugefügt werden. Die Information kann für das anschließende Labelling der Trainingsdaten genutzt werden oder kann diesen Vorgang zumindest erleichtern oder unterstützen.

Da die Lasterkennungseinheit 18 mit der Fahrzeugsteuerung datentechnisch gekoppelt ist, können aus der Fahrzeugsteuerung Fahrzeugparameter abgefragt werden, die Rückschlüsse auf eine Bewegung des Flurförderzeugs 2 im entsprechenden Zeitintervall zulassen. Mit anderen Worten kann anhand der abgefragten Betriebsdaten auf die Bewegung des Flurförderzeugs 2 zurückgerechnet werden. Wiederum in Kenntnis der Montageposition des 2D-Kamerasystems 6 sowie der intrinsischen und extrinsischen Kameraparameter kann aus der Bewegung des Flurförderzeugs 2 auf eine Bewegung und Position des Objekts in den 2D-Bilddaten 8 zurückgerechnet werden. Mit anderen Worten wird also anhand der Bewegung des Flurförderzeugs 2 eine Bewegung des erkannten Objekts in den 2D-Bilddaten 8 rekonstruiert. Auch diese Information kann den Trainingsdaten für das neuronale Netz hinzugefügt werden. Entsprechende Informationen können an die Trainingsdatenerfassungseinheit 20 kommuniziert werden.

Die Lasterkennungseinheit 18 kann ferner dazu eingerichtet sein, den zumindest einen Teil des Lasttransporthilfsmittels 10 im Lastaufnahmebereich unter Anwendung eines Erkennungsschwellenwerts zu detektieren. Dieser Erkennungsschwellenwert kann beispielsweise auf die Ausgabe des neuronalen Netzes, welches den zumindest einen Teil des Lasttransporthilfsmittels 10 erkennt, angewandt werden. Erkennt die Lasterkennungseinheit 18 außerdem eine Umschlagsequenz, wobei gleichzeitig in den 2D-Bilddaten 8 kein Objekt erkannt wird, so kann dies als Hinweis darauf gewertet werden, dass der Erkennungsschwellenwert zu hoch angesetzt ist. Die entsprechenden 2D-Bilddaten 8 können als Trainingsdaten gespeichert werden. Sie können anschließend mit unterschiedlichen und insbesondere staffelweise geringeren Schwellenwerten erneut mit dem neuronalen Netz ausgewertet werden. Dieser Vorgang kann so lange fortgesetzt werden, bis in den 2D-Bilddaten 8 ein Objekt, beispielsweise eine Palettentasche 14 oder ein Mittelklotz der Palette, erkannt wird. So kann den Trainingsdaten ein entsprechender Erkennungsschwellenwert zugeordnet werden.

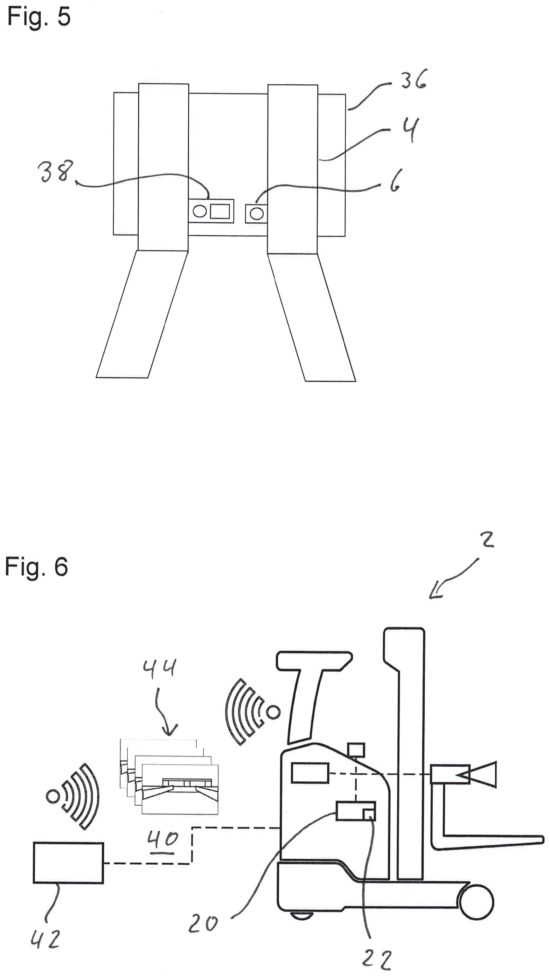

Fig. 5 zeigt in vereinfachter Frontalansicht das Lastaufnahmemittel 4 des Flurförderzeugs 2, beispielhaft eine Lastgabel. Als Teil der Lasterkennungseinheit 18 sind am Gabelrücken 36 neben dem 2D-Kamerasystem 6 noch weitere Sensoren angeordnet. Es handelt sich bei diesen beispielhaft um ein 3D-Kamerasystem 38. Alternativ handelt es sich um ein Lichttasteraggregat. Mithilfe dieser weiteren Sensorik können Umfelddaten im Lastaufnahmebereich gewonnen werden. Auf der Grundlage der beispielsweise mit dem 3D-Kamerasystem 38 oder dem Lichttasteraggregat erzeugten Punktwolke kann eine Position eines Teils des Lasttransporthilfsmittels 10, also beispielsweise eine Position der Palettentasche 14 oder eines Mittelklotzes der Palette, erfasst werden. Diese Information kann für eine Objektmarkierung in den erfassten 2D-Bilddaten 8 verwendet werden, sodass die Trainingsdaten verbessert werden.

Mithilfe der Trainingsdatenerfassungseinheit 20 werden von dem Flurförderzeug 2 Trainingsdaten für das neuronale Netz gesammelt. Die Trainingsdaten können direkt in dem Flurförderzeug 2 ausgewertet werden oder sie können zur weiteren Verarbeitung auf eine weitere Datenverarbeitungseinheit 42, beispielsweise einen Server oder einen Cloudservice, übertragen werden.

Fig. 6 zeigt das bereits bekannte Flurförderzeug 2, welches sich beispielhaft an einer nicht dargestellten Ladestation befinden soll. Während des Ladevorgangs werden die von der Trainingsdatenerfassungseinheit 20 gesammelten Daten von dessen Speicher 22 über eine drahtgebundene oder drahtlose Datenverbindung 40 auf die weitere Verarbeitungseinheit 42 übertragen. Die Trainingsdaten 44 können neben den Bilddaten 44 auch weitere Informationen umfassen, welche eine Objektmarkierung der in den 2D-Bilddaten vorhandenen Objekte erleichtert oder bereits zur Verfügung stellt. Die nach Verarbeitung der 2D-Bilddaten 8, sodass diese als Trainingsdaten für das neuronale Netz tauglich sind, ist also wesentlich vereinfacht bzw. kann weitgehend entfallen oder automatisiert durchgeführt werden. Beispielsweise verläuft die Datenverbindung 40 über das Ladegerät, mit welchem das Flurförderzeug 2 zur Zeit aufgeladen wird. Eine solche Lösung ist vor allem für eine drahtgebundene Datenverbindung 40 vorteilhaft.

Das Flurförderzeug 2 kann so wie zuvor beschrieben betrieben werden, wobei während des Betriebs des Flurförderzeugs 2 Trainingsdaten für das neuronale Netz erfasst werden. Somit ist nicht nur ein Flurförderzeug 2 selbst und ein Verfahren zum Betreiben des Flurförderzeugs 2 beschrieben, sondern in gleicher Weise auch ein Verfahren zum Trainieren eines neuronalen Netzes.

Den 2D-Bilddaten 8, die das Flurförderzeug 2 erfasst hat, werden Objektmarkierungen hinzugefügt. Die mit den Objektmarkierungen versehenen 2D-Bilddaten 8 werden als Trainingsdaten dem neuronalen Netz bereitgestellt. Anschließend wird das neuronale Netz trainiert und zwar auf die Erkennung zumindest eines Teils des Lasttransporthilfsmittels 10. Anschließend wird das aktualisierte neuronale Netz bzw. seine Parameter über die drahtgebundene oder drahtlose Datenverbindung 40 zurück auf das Flurförderzeug 2 übertragen. Das auf dem Flurförderzeug 2 laufende neuronale Netz kann so auf die Erkennung des zumindest einen Teils des Lasttransporthilfsmittels 10 nachtrainiert und an seine Umgebung, in der das Flurförderzeug 2 betrieben wird, angepasst werden. Dies führt zu einer wesentlich verbesserten Erkennungsgenauigkeit. Beschrieben sind somit auch ein Verfahren zum Erzeugen von Trainingsdaten für ein neuronales Netz sowie die vorteilhafte Verwendung des Flurförderzeugs 2 zur Erzeugung solcher Trainingsdaten.

### Weitere Ausführungsbeispiele:

1. Flurförderzeug (2) mit einem Lastaufnahmemittel (4) und einem 2D-Kamerasystem (6), wobei
   das Lastaufnahmemittel (4) zur Aufnahme einer auf einem Lasttransporthilfsmittel (10) vorhandenen Last (12) eingerichtet ist,
   das 2D-Kamerasystem (6) zur Erfassung eines Lastaufnahmebereichs eingerichtet ist, der sich vor dem Lastaufnahmemittel (4) in einer Lastaufnahmerichtung (R) erstreckt,
   gekennzeichnet durch
   eine Lasterkennungseinheit (18), die dazu eingerichtet ist, zumindest einen Teil des Lasttransporthilfsmittels (10) im Lastaufnahmebereich zu detektieren,
   eine Trainingsdatenerfassungseinheit (20), die dazu eingerichtet ist, einen Trainingsdatenerfassungsbefehl zu empfangen und in Reaktion darauf von dem 2D-Kamerasystem (6) erfasste 2D-Bilddaten (8) als Trainingsdaten für ein neuronales Netz zu speichern.
2. Flurförderzeug (2) nach Anspruch 1, ferner aufweisend eine Anzeige (24) zur Ausgabe der 2D-Bilddaten (8) und eine Benutzerschnittstelle (26) zum Empfang von Benutzereingaben (30), wobei
   in der Lasterkennungseinheit (18) ein neuronales Netz implementiert ist und die Lasterkennungseinheit (18) dazu eingerichtet ist, die 2D-Bilddaten (8) dem neuronalen Netz als Eingangsdaten zuzuführen, wobei das neuronale Netz darauf trainiert ist, in den 2D-Bilddaten (8) zumindest einen Teil des Lasttransporthilfsmittels (10) als Objekt zu erkennen und die Lasterkennungseinheit (18) ferner dazu eingerichtet ist, eine Position des erkannten Objekts in den 2D-Bilddaten (8) mit einer Objektmarkierung (28) zu markieren und die Objektmarkierung (28) gemeinsam mit den 2D-Bilddaten (8) auf der Anzeige (24) auszugeben, wobei
   die Benutzerschnittstelle (26) dazu eingerichtet ist, in Reaktion auf die Ausgabe der 2D-Bilddaten (8) mit der Objektmarkierung (28) auf der Anzeige (24) eine Benutzereingabe (30) als Trainingsdatenerfassungsbefehl zu empfangen und an die Trainingsdatenerfassungseinheit (20) zu kommunizieren.
3. Flurförderzeug (2) nach Anspruch 1 oder 2, wobei
   in der Lasterkennungseinheit (18) ein weiteres neuronales Netz implementiert ist und die Lasterkennungseinheit (18) dazu eingerichtet ist, die 2D-Bilddaten (8) dem weiteren neuronalen Netz als Eingangsdaten zuzuführen, wobei das weitere neuronale Netz ferner darauf trainiert ist, in den 2D-Bilddaten (8) ein unbekanntes Objekt (32) zu erkennen und in den 2D-Bilddaten (8) mit einer Objektmarkierung (28) zu markieren, wobei
   die Lasterkennungseinheit (18) ferner dazu eingerichtet ist, in Reaktion auf die Erkennung des unbekannten Objekts (32) den Trainingsdatenerfassungsbefehl zu erzeugen und an die Trainingsdatenerfassungseinheit (20) zu kommunizieren.
4. Flurförderzeug (2) nach Anspruch 3, wobei in der Lasterkennungseinheit (18) ein weiteres neuronales Netz implementiert ist, welches darauf trainiert ist, das unbekannte Objekt (32) einer Objektklasse zuzuordnen, wobei
   die Lasterkennungseinheit (18) ferner dazu eingerichtet ist, die Objektmarkierung (28) und die Objektklasse der Trainingsdatenerfassungseinheit (20) zu kommunizieren, wobei
   die Trainingsdatenerfassungseinheit (20) dazu eingerichtet ist, die von dem 2D-Kamerasystem (6) erfassten 2D-Bilddaten (8) gemeinsam mit der Objektmarkierung (28) und der Objektklasse des unbekannten Objekts (32) als Trainingsdaten für das neuronale Netz zu speichern.
5. Flurförderzeug (2) nach Anspruch **4,** ferner aufweisend eine Anzeige (24) zur Ausgabe der 2D-Bilddaten (8) und eine Benutzerschnittstelle (26) zum Empfang von Benutzereingaben (30), wobei
   die Lasterkennungseinheit (18) ferner dazu eingerichtet ist, eine Position des unbekannten Objekts (32) in den 2D-Bilddaten (8) mit einer Objektmarkierung (28) zu markieren und die Objektmarkierung (28) gemeinsam mit der Objektklasse und den 2D-Bilddaten (8) auf der Anzeige (24) auszugeben, wobei
   die Benutzerschnittstelle (26) dazu eingerichtet ist, in Reaktion auf die Ausgabe der 2D-Bilddaten (8) mit der Objektmarkierung und der Objektklasse auf der Anzeige (24) eine Benutzereingabe (30) als Trainingsdatenerfassungsbefehl zu empfangen, wobei die Benutzereingabe (30) ferner eine Bestätigung der Objektklasse oder Informationen zu einer alternativen Objektklasse umfasst.
6. Flurförderzeug (2) nach einem der vorhergehenden Ansprüche, wobei
   die Lasterkennungseinheit (18) mit einer Fahrzeugsteuerung des Flurförderzeugs (2) datentechnisch gekoppelt und dazu eingerichtet ist, anhand von Betriebsdaten des Flurförderzeugs (2) aus der Fahrzeugsteuerung eine Umschlagsequenz der Last (12) zu erkennen und in Reaktion auf die Erkennung der Umschlagsequenz den Trainingsdatenerfassungsbefehl zu erzeugen und an die Trainingsdatenerfassungseinheit (20) zu kommunizieren.
7. Flurförderzeug (2) nach Anspruch 6, wobei
   die Lasterkennungseinheit (18) ferner dazu eingerichtet ist, in der Umschlagsequenz einen Zeitpunkt der Lastaufnahme und/ oder der Lastablage zu bestimmen und gemeinsam mit dem Trainingsdatenerfassungsbefehl der Trainingsdatenerfassungseinheit (20) einen Zielbereich des zumindest einen Teils des Lasttransporthilfsmittels (10) zu kommunizieren, der daraus abgeleitet wird, dass in den 2D-Bilddaten (8) zum Zeitpunkt der Lastaufnahme und/oder der Lastablage das Lasttransporthilfsmittel (10) mittig auf dem Lastaufnahmemittel (4) angeordnet ist.
8. Flurförderzeug (2) nach Anspruch 6, wobei
   die Lasterkennungseinheit (18) ferner dazu eingerichtet ist, anhand von Betriebsdaten des Flurförderzeugs (2) aus der Fahrzeugsteuerung auf eine Bewegung des Flurförderzeugs (2) in einem Zeitintervall umfassend die Umschlagsequenz zurückzurechnen und eine Bewegung des Flurförderzeugs (2) in dem Zeitintervall kennzeichnende Bewegungsdaten gemeinsam mit dem Trainingsdatenerfassungsbefehl der Trainingsdatenerfassungseinheit (20) zu kommunizieren.
9. Flurförderzeug (2) nach Anspruch 6, wobei
   die Lasterkennungseinheit (18) dazu eingerichtet ist, den zumindest einen Teil des Lasttransporthilfsmittels (12) im Lastaufnahmebereich unter Anwendung eines Erkennungsschwellenwerts zu detektieren, wobei die Lasterkennungseinheit (18) ferner dazu eingerichtet ist, in den 2D-Bilddaten (8) aus einem Zeitintervall umfassend die Umschlagsequenz, eine Erkennung des zumindest einen Teil des Lasttransporthilfsmittels (10) mit unterschiedlichen Erkennungsschwellenwerten durchzuführen und im Fall einer erfolgreichen Erkennung die 2D-Bilddaten (8) gemeinsam mit dem Schwellenwert, für den die Erkennung erfolgreich war, an die Trainingsdatenerfassungseinheit (20) als Trainingsdaten für das neuronale Netz zu kommunizieren.
10. Flurförderzeug (2) nach einem der vorhergehenden Ansprüche, wobei
   die Lasterkennungseinheit (18) dazu eingerichtet ist, den zumindest einen Teil des Lasttransporthilfsmittels (10) auf der Grundlage von Umfelddaten zu detektieren, die von den 2D-Bilddaten (8) verschieden sind, wobei die Umfelddaten den Lastaufnahmebereich räumlich umfassende Daten aus zumindest einer der folgenden Gruppe sind:
   a) 3D-Daten eines 3D-Kamerasystems (38),
   b) 3D-Daten eines Lichttasteraggregats,
   c) Betriebsdaten einer Ablaufsteuerung des Flurförderzeugs (2).

11. Flurförderzeug (2) nach einem der vorhergehenden Ansprüche, wobei
   die Trainingsdatenerfassungseinheit (20) ferner dazu eingerichtet ist, die Trainingsdaten über eine drahtlose Datenverbindung (40) oder eine drahtgebundene Datenverbindung (40), welche insbesondere über ein Ladegerät verläuft, an eine weitere Datenverarbeitungseinheit (42) zu kommunizieren und/oder
   die Trainingsdatenerfassungseinheit (20) ferner dazu eingerichtet ist, aktualisierte Daten des neuronalen Netzes über eine drahtlose Datenverbindung (40) oder eine drahtgebundene Datenverbindung (40), welche insbesondere über ein Ladegerät verläuft, zu empfangen.
12. Verfahren zum Betreiben eines Flurförderzeugs (2) mit einem Lastaufnahmemittel (4) und einem 2D-Kamerasystem (6), wobei
   mit dem Lastaufnahmemittel (4) eine auf einem Lasttransporthilfsmittel (10) vorhandene Last (12) aufgenommen wird,
   mit dem 2D-Kamerasystem (6) ein Lastaufnahmebereich aufgenommen wird, der sich vor dem Lastaufnahmemittel (4) in einer Lastaufnahmerichtung (R) erstreckt,
   dadurch gekennzeichnet, dass
   das Flurförderzeug (2) ferner eine Lasterkennungseinheit (18) umfasst, mit der zumindest ein Teil des Lasttransporthilfsmittels (10) im Lastaufnahmebereich detektiert wird, wobei
   die Trainingsdatenerfassungseinheit (18) einen Trainingsdatenerfassungsbefehl empfängt und in Reaktion darauf von dem 2D-Kamerasystem (6) erfasste 2D-Bilddaten (8) als Trainingsdaten für ein neuronales Netz speichert.
13. Verfahren nach Anspruch 12, wobei das Flurförderzeug (2) ferner eine Anzeige (24) aufweist, auf der die 2D-Bilddaten (8) angezeigt werden und das Flurförderzeug (2) ferner eine Benutzerschnittstelle (26) aufweist, über die Benutzereingaben (30) empfangen werden, wobei
   in der Lasterkennungseinheit (18) ein neuronales Netz implementiert ist und die Lasterkennungseinheit (18) die 2D-Bilddaten (8) dem neuronalen Netz als Eingangsdaten zuführt, wobei das neuronale Netz darauf trainiert ist, in den 2D-Bilddaten (8) zumindest einen Teil des Transporthilfsmittels (10) als Objekt zu erkennen und die Lasterkennungseinheit (18) ferner eine Position des erkannten Objekts in den 2D-Bilddaten (8) mit einer Objektmarkierung (28) markiert und die Objektmarkierung (28) gemeinsam mit den 2D-Bilddaten (8) auf der Anzeige (24) ausgibt, wobei
   an der Benutzerschnittstelle (26) in Reaktion auf die Ausgabe der 2D-Bilddaten (8) mit der Objektmarkierung (28) auf der Anzeige (24) eine Benutzereingabe (30) als Trainingsdatenerfassungsbefehl empfangen und an die Trainingsdatenerfassungseinheit (20) kommuniziert wird.
14. Verfahren nach Anspruch 12, wobei
   in der Lasterkennungseinheit (18) ein weiteres neuronales Netz implementiert ist und die Lasterkennungseinheit (18) die 2D-Bilddaten (8) dem neuronalen Netz als Eingangsdaten zuführt, wobei das neuronale Netz ferner darauf trainiert ist, in den 2D-Bilddaten (8) ein unbekanntes Objekt (32) zu erkennen und in den 2D-Bilddaten (8) mit einer Objektmarkierung (28) zu markieren, wobei
   die Lasterkennungseinheit (18) ferner in Reaktion auf die Erkennung des unbekannten Objekts (32) den Trainingsdatenerfassungsbefehl erzeugt und an die Trainingsdatenerfassungseinheit (20) kommuniziert.
15. Verfahren nach Anspruch 14, wobei in der Lasterkennungseinheit (18) ein weiteres neuronales Netz implementiert ist, welches darauf trainiert ist, das unbekannte Objekt (32) einer Objektklasse zuzuordnen, wobei
   die Lasterkennungseinheit (18) ferner die Objektmarkierung (28) und die Objektklasse der Trainingsdatenerfassungseinheit (20) kommuniziert, wobei
   die Trainingsdatenerfassungseinheit (20) die von dem 2D-Kamerasystem (6) erfassten 2D-Bilddaten (8) gemeinsam mit der Objektmarkierung (28) und der Objektklasse des unbekannten Objekts als Trainingsdaten für das neuronale Netz speichert.
16. Verfahren nach Anspruch 15, wobei das Flurförderzeug (2) ferner eine Anzeige zur Ausgabe der 2D-Bilddaten (8) und eine Benutzerschnittstelle (26) zum Empfang von Benutzereingaben (30) umfasst, wobei
   die Lasterkennungseinheit (18) ferner eine Position des unbekannten Objekts (32) in den 2D-Bilddaten (8) mit einer Objektmarkierung (28) markiert und die Objektmarkierung (28) gemeinsam mit der Objektklasse und den 2D-Bilddaten (8) auf der Anzeige (24) ausgibt, wobei
   die Benutzerschnittstelle (26) in Reaktion auf die Ausgabe der 2D-Bilddaten (8) mit der Objektmarkierung (28) und der Objektklasse auf der Anzeige (24) eine Benutzereingabe (30) als Trainingsdatenerfassungsbefehl empfängt, wobei die Benutzereingabe (30) ferner eine Bestätigung der Objektklasse oder Informationen zu einer alternativen Objektklasse umfasst.
17. Verfahren nach einem der Ansprüche 12 bis 16, wobei
   die Lasterkennungseinheit (18) mit einer Fahrzeugsteuerung des Flurförderzeugs (2) datentechnisch gekoppelt ist und anhand von Betriebsdaten des Flurförderzeugs (2) aus der Fahrzeugsteuerung eine Umschlagsequenz der Last (12) erkennt und in Reaktion auf die Erkennung der Umschlagsequenz den Trainingsdatenerfassungsbefehl erzeugt und an die Trainingsdatenerfassungseinheit (22) kommuniziert.
18. Verfahren nach Anspruch 17, wobei
   die Lasterkennungseinheit (18) ferner in der Umschlagsequenz einen Zeitpunkt der Lastaufnahme und/oder der Lastablage bestimmt, und gemeinsam mit dem Trainingsdatenerfassungsbefehl der Trainingsdatenerfassungseinheit (20) einen Zielbereich des zumindest einen Teils des Lasttransporthilfsmittels (10) kommuniziert, der daraus abgeleitet wird, dass in der 2D-Bilddaten (8) zum Zeitpunkt der Lastaufnahme und/oder der Lastablage das Lasttransporthilfsmittel (10) mittig auf dem Lastaufnahmemittel (4) angeordnet ist.
19. Verfahren nach Anspruch 17, wobei
   die Lasterkennungseinheit (18) anhand von Betriebsdaten des Flurförderzeugs (2) aus der Fahrzeugsteuerung auf eine Bewegung des Flurförderzeugs (2) in einem Zeitintervall umfassend die Umschlagsequenz zurückrechnet und eine Bewegung des Flurförderzeugs (2) in dem Zeitintervall kennzeichnende Bewegungsdaten gemeinsam mit dem Trainingsdatenerfassungsbefehl der Trainingsdatenerfassungseinheit (20) kommuniziert.
20. Verfahren nach Anspruch 17, wobei
   die Lasterkennungseinheit (18) den zumindest einen Teil des Lasttransporthilfsmittels (10) im Lastaufnahmebereich unter Anwendung eines Erkennungsschwellenwerts detektiert, wobei die Lasterkennungseinheit (18) ferner die 2D-Bilddaten (8) aus einem Zeitintervall umfassend die Umschlagsequenz analysiert und eine Erkennung des zumindest einen Teils des Lasttransporthilfsmittels (10) mit unterschiedlichen Erkennungsschwellenwerten durchführt, wobei im Fall einer erfolgreichen Erkennung die 2D-Bilddaten (8) gemeinsam mit dem Schwellenwert, für den die Erkennung erfolgreich war, der Trainingsdatenerfassungseinheit (20) als Trainingsdaten für das neuronale Netz kommuniziert werden.
21. Verfahren nach einem der Ansprüche 12 bis 20, wobei
   die Lasterkennungseinheit (18) den zumindest einen Teil des Lasttransporthilfsmittels (10) auf der Grundlage von Umfelddaten detektiert, die von den 2D-Bilddaten (8) verschieden sind, wobei die Umfelddaten den Lastaufnahmebereich räumlich umfassende Daten aus zumindest einer der folgenden Gruppe sind:
   a) 3D-Daten eines 3D-Kamerasystems (38),
   b) 3D-Daten eines Lichttasteraggregats,
   c) Betriebsdaten einer Ablaufsteuerung des Flurförderzeugs (2).
22. Verfahren nach einem der Ansprüche 12 bis 21, wobei
   die Trainingsdatenerfassungseinheit (18) ferner die Trainingsdaten über eine drahtlose Datenverbindung (40) oder eine drahtgebundene Datenverbindung (40), welche insbesondere über ein Ladegerät verläuft, an eine weitere Datenverarbeitungseinheit (42) kommuniziert und/oder
   die Trainingsdatenerfassungseinheit (18) ferner aktualisierte Daten des neuronalen Netzes über eine drahtlose Datenverbindung (40) oder eine drahtgebundene Datenverbindung (40), welche insbesondere über ein Ladegerät verläuft, empfängt.
23. Verfahren zum Trainieren eines neuronalen Netzes, die folgenden Schritte umfassend:
   Bereitstellen von Trainingsdaten durch Ausführung eines Verfahrens nach einem der Ansprüche 12 bis 21,

   Hinzufügen oder Bestätigen von Objektmarkierungen (28) in den 2D-Bilddaten (8) und
   Bereitstellen der mit Objektmarkierungen (28) versehenen 2D-Bilddaten (8) als Trainingsdaten für das neuronale Netz,
   Trainieren des neuronalen Netzes auf eine Erkennung des zumindest einen Teils des Lasttransporthilfsmittels (10) in den 2D-Bilddaten (8).
24. Verfahren zum Erzeugen von Trainingsdaten für ein neuronales Netz eines Flurförderzeugs (2), indem das Flurförderzeug (2) in einer Logistikeinrichtung gemäß einem Verfahren nach einem der Ansprüche 12 bis 22 betrieben wird.
25. Verwendung eines Flurförderzeugs (2) nach einem der Ansprüche 1 bis 11 zur Erzeugung von Trainingsdaten für ein neuronales Netz des Flurförderzeugs (2).

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Flurförderzeug
- 4: Lastaufnahmemittel
- 6: 2D-Kamerasystem
- 8: 2D-Bilddaten
- 10: Lasttransporthilfsmittel
- 12: Last
- 14: Palettentaschen
- 16: Hub-/Schubmast
- 18: Lasterkennungseinheit
- 20: Trainingsdatenerfassungseinheit
- 22: Datenspeicher
- 24: Anzeige
- 26: Benutzerschnittstelle
- 28: Objektmarkierung
- 30: Benutzereingabe
- 32: unbekanntes Objekt
- 34: Regal
- 36: Gabelrücken
- 38: 3D-Kamerasystem
- 40: Datenverbindung
- 42: weitere Datenverarbeitungseinheit
- 44: Trainingsdaten
- R: Lastaufnahmerichtung

## Patentansprüche

1. Flurförderzeug (2) mit einem Lastaufnahmemittel (4) und einem 2D-Kamerasystem (6), wobei
das Lastaufnahmemittel (4) zur Aufnahme einer auf einem Lasttransporthilfsmittel (10) vorhandenen Last (12) eingerichtet ist,
das 2D-Kamerasystem (6) zur Erfassung eines Lastaufnahmebereichs eingerichtet ist, der sich vor dem Lastaufnahmemittel (4) in einer Lastaufnahmerichtung (R) erstreckt,
**gekennzeichnet durch**
eine Lasterkennungseinheit (18), die dazu eingerichtet ist, zumindest einen Teil des Lasttransporthilfsmittels (10) im Lastaufnahmebereich zu detektieren,
eine Trainingsdatenerfassungseinheit (20), die dazu eingerichtet ist, einen Trainingsdatenerfassungsbefehl zu empfangen und in Reaktion darauf von dem 2D-Kamerasystem (6) erfasste 2D-Bilddaten (8) als Trainingsdaten für ein neuronales Netz zu speichern.

2. Flurförderzeug (2) nach Anspruch 1, ferner aufweisend eine Anzeige (24) zur Ausgabe der 2D-Bilddaten (8) und eine Benutzerschnittstelle (26) zum Empfang von Benutzereingaben (30), wobei
in der Lasterkennungseinheit (18) ein neuronales Netz implementiert ist und die Lasterkennungseinheit (18) dazu eingerichtet ist, die 2D-Bilddaten (8) dem neuronalen Netz als Eingangsdaten zuzuführen, wobei das neuronale Netz darauf trainiert ist, in den 2D-Bilddaten (8) zumindest einen Teil des Lasttransporthilfsmittels (10) als Objekt zu erkennen und die Lasterkennungseinheit (18) ferner dazu eingerichtet ist, eine Position des erkannten Objekts in den 2D-Bilddaten (8) mit einer Objektmarkierung (28) zu markieren und die Objektmarkierung (28) gemeinsam mit den 2D-Bilddaten (8) auf der Anzeige (24) auszugeben, wobei
die Benutzerschnittstelle (26) dazu eingerichtet ist, in Reaktion auf die Ausgabe der 2D-Bilddaten (8) mit der Objektmarkierung (28) auf der Anzeige (24) eine Benutzereingabe (30) als Trainingsdatenerfassungsbefehl zu empfangen und an die Trainingsdatenerfassungseinheit (20) zu kommunizieren.

3. Flurförderzeug (2) nach Anspruch 1 oder 2, wobei
in der Lasterkennungseinheit (18) ein weiteres neuronales Netz implementiert ist und die Lasterkennungseinheit (18) dazu eingerichtet ist, die 2D-Bilddaten (8) dem weiteren neuronalen Netz als Eingangsdaten zuzuführen, wobei das weitere neuronale Netz ferner darauf trainiert ist, in den 2D-Bilddaten (8) ein unbekanntes Objekt (32) zu erkennen und in den 2D-Bilddaten (8) mit einer Objektmarkierung (28) zu markieren, wobei
die Lasterkennungseinheit (18) ferner dazu eingerichtet ist, in Reaktion auf die Erkennung des unbekannten Objekts (32) den Trainingsdatenerfassungsbefehl zu erzeugen und an die Trainingsdatenerfassungseinheit (20) zu kommunizieren,
wobei insbesondere
in der Lasterkennungseinheit (18) ein weiteres neuronales Netz implementiert ist, welches darauf trainiert ist, das unbekannte Objekt (32) einer Objektklasse zuzuordnen, wobei die Lasterkennungseinheit (18) ferner dazu eingerichtet ist, die Objektmarkierung (28) und die Objektklasse der Trainingsdatenerfassungseinheit (20) zu kommunizieren, und wobei
die Trainingsdatenerfassungseinheit (20) dazu eingerichtet ist, die von dem 2D-Kamerasystem (6) erfassten 2D-Bilddaten (8) gemeinsam mit der Objektmarkierung (28) und der Objektklasse des unbekannten Objekts (32) als Trainingsdaten für das neuronale Netz zu speichern,
ferner insbesondere aufweisend eine Anzeige (24) zur Ausgabe der 2D-Bilddaten (8) und eine Benutzerschnittstelle (26) zum Empfang von Benutzereingaben (30), wobei
die Lasterkennungseinheit (18) ferner dazu eingerichtet ist, eine Position des unbekannten Objekts (32) in den 2D-Bilddaten (8) mit einer Objektmarkierung (28) zu markieren und die Objektmarkierung (28) gemeinsam mit der Objektklasse und den 2D-Bilddaten (8) auf der Anzeige (24) auszugeben, und wobei
die Benutzerschnittstelle (26) dazu eingerichtet ist, in Reaktion auf die Ausgabe der 2D-Bilddaten (8) mit der Objektmarkierung und der Objektklasse auf der Anzeige (24) eine Benutzereingabe (30) als Trainingsdatenerfassungsbefehl zu empfangen, wobei die Benutzereingabe (30) ferner eine Bestätigung der Objektklasse oder Informationen zu einer alternativen Objektklasse umfasst.

4. Flurförderzeug (2) nach einem der vorhergehenden Ansprüche, wobei die Lasterkennungseinheit (18) mit einer Fahrzeugsteuerung des Flurförderzeugs (2) datentechnisch gekoppelt und dazu eingerichtet ist, anhand von Betriebsdaten des Flurförderzeugs (2) aus der Fahrzeugsteuerung eine Umschlagsequenz der Last (12) zu erkennen und in Reaktion auf die Erkennung der Umschlagsequenz den Trainingsdatenerfassungsbefehl zu erzeugen und an die Trainingsdatenerfassungseinheit (20) zu kommunizieren, wobei insbesondere
die Lasterkennungseinheit (18) ferner dazu eingerichtet ist, in der Umschlagsequenz einen Zeitpunkt der Lastaufnahme und/ oder der Lastablage zu bestimmen und gemeinsam mit dem Trainingsdatenerfassungsbefehl der Trainingsdatenerfassungseinheit (20) einen Zielbereich des zumindest einen Teils des Lasttransporthilfsmittels (10) zu kommunizieren, der daraus abgeleitet wird, dass in den 2D-Bilddaten (8) zum Zeitpunkt der Lastaufnahme und/oder der Lastablage das Lasttransporthilfsmittel (10) mittig auf dem Lastaufnahmemittel (4) angeordnet ist,
oder
die Lasterkennungseinheit (18) ferner dazu eingerichtet ist, anhand von Betriebsdaten des Flurförderzeugs (2) aus der Fahrzeugsteuerung auf eine Bewegung des Flurförderzeugs (2) in einem Zeitintervall umfassend die Umschlagsequenz zurückzurechnen und eine Bewegung des Flurförderzeugs (2) in dem Zeitintervall kennzeichnende Bewegungsdaten gemeinsam mit dem Trainingsdatenerfassungsbefehl der Trainingsdatenerfassungseinheit (20) zu kommunizieren,
oder
die Lasterkennungseinheit (18) dazu eingerichtet ist, den zumindest einen Teil des Lasttransporthilfsmittels (12) im Lastaufnahmebereich unter Anwendung eines Erkennungsschwellenwerts zu detektieren, wobei die Lasterkennungseinheit (18) ferner dazu eingerichtet ist, in den 2D-Bilddaten (8) aus einem Zeitintervall umfassend die Umschlagsequenz, eine Erkennung des zumindest einen Teil des Lasttransporthilfsmittels (10) mit unterschiedlichen Erkennungsschwellenwerten durchzuführen und im Fall einer erfolgreichen Erkennung die 2D-Bilddaten (8) gemeinsam mit dem Schwellenwert, für den die Erkennung erfolgreich war, an die Trainingsdatenerfassungseinheit (20) als Trainingsdaten für das neuronale Netz zu kommunizieren.

5. Flurförderzeug (2) nach einem der vorhergehenden Ansprüche, wobei die Lasterkennungseinheit (18) dazu eingerichtet ist, den zumindest einen Teil des Lasttransporthilfsmittels (10) auf der Grundlage von Umfelddaten zu detektieren, die von den 2D-Bilddaten (8) verschieden sind, wobei die Umfelddaten den Lastaufnahmebereich räumlich umfassende Daten aus zumindest einer der folgenden Gruppe sind:
a) 3D-Daten eines 3D-Kamerasystems (38),
b) 3D-Daten eines Lichttasteraggregats,
c) Betriebsdaten einer Ablaufsteuerung des Flurförderzeugs (2).

6. Flurförderzeug (2) nach einem der vorhergehenden Ansprüche, wobei die Trainingsdatenerfassungseinheit (20) ferner dazu eingerichtet ist, die Trainingsdaten über eine drahtlose Datenverbindung (40) oder eine drahtgebundene Datenverbindung (40), welche insbesondere über ein Ladegerät verläuft, an eine weitere Datenverarbeitungseinheit (42) zu kommunizieren und/oder
die Trainingsdatenerfassungseinheit (20) ferner dazu eingerichtet ist, aktualisierte Daten des neuronalen Netzes über eine drahtlose Datenverbindung (40) oder eine drahtgebundene Datenverbindung (40), welche insbesondere über ein Ladegerät verläuft, zu empfangen.

7. Verfahren zum Betreiben eines Flurförderzeugs (2) mit einem Lastaufnahmemittel (4) und einem 2D-Kamerasystem (6), wobei
mit dem Lastaufnahmemittel (4) eine auf einem Lasttransporthilfsmittel (10) vorhandene Last (12) aufgenommen wird,
mit dem 2D-Kamerasystem (6) ein Lastaufnahmebereich aufgenommen wird, der sich vor dem Lastaufnahmemittel (4) in einer Lastaufnahmerichtung (R) erstreckt,
**dadurch gekennzeichnet, dass**
das Flurförderzeug (2) ferner eine Lasterkennungseinheit (18) umfasst, mit der zumindest ein Teil des Lasttransporthilfsmittels (10) im Lastaufnahmebereich detektiert wird, wobei
die Trainingsdatenerfassungseinheit (18) einen Trainingsdatenerfassungsbefehl empfängt und in Reaktion darauf von dem 2D-Kamerasystem (6) erfasste 2D-Bilddaten (8) als Trainingsdaten für ein neuronales Netz speichert.

8. Verfahren nach Anspruch 7, wobei das Flurförderzeug (2) ferner eine Anzeige (24) aufweist, auf der die 2D-Bilddaten (8) angezeigt werden und das Flurförderzeug (2) ferner eine Benutzerschnittstelle (26) aufweist, über die Benutzereingaben (30) empfangen werden, wobei
in der Lasterkennungseinheit (18) ein neuronales Netz implementiert ist und die Lasterkennungseinheit (18) die 2D-Bilddaten (8) dem neuronalen Netz als Eingangsdaten zuführt, wobei das neuronale Netz darauf trainiert ist, in den 2D-Bilddaten (8) zumindest einen Teil des Transporthilfsmittels (10) als Objekt zu erkennen und die Lasterkennungseinheit (18) ferner eine Position des erkannten Objekts in den 2D-Bilddaten (8) mit einer Objektmarkierung (28) markiert und die Objektmarkierung (28) gemeinsam mit den 2D-Bilddaten (8) auf der Anzeige (24) ausgibt, wobei
an der Benutzerschnittstelle (26) in Reaktion auf die Ausgabe der 2D-Bilddaten (8) mit der Objektmarkierung (28) auf der Anzeige (24) eine Benutzereingabe (30) als Trainingsdatenerfassungsbefehl empfangen und an die Trainingsdatenerfassungseinheit (20) kommuniziert wird.

9. Verfahren nach Anspruch 7, wobei
in der Lasterkennungseinheit (18) ein weiteres neuronales Netz implementiert ist und die Lasterkennungseinheit (18) die 2D-Bilddaten (8) dem neuronalen Netz als Eingangsdaten zuführt, wobei das neuronale Netz ferner darauf trainiert ist, in den 2D-Bilddaten (8) ein unbekanntes Objekt (32) zu erkennen und in den 2D-Bilddaten (8) mit einer Objektmarkierung (28) zu markieren, wobei
die Lasterkennungseinheit (18) ferner in Reaktion auf die Erkennung des unbekannten Objekts (32) den Trainingsdatenerfassungsbefehl erzeugt und an die Trainingsdatenerfassungseinheit (20) kommuniziert, wobei insbesondere
in der Lasterkennungseinheit (18) ein weiteres neuronales Netz implementiert ist, welches darauf trainiert ist, das unbekannte Objekt (32) einer Objektklasse zuzuordnen, wobei
die Lasterkennungseinheit (18) ferner die Objektmarkierung (28) und die Objektklasse der Trainingsdatenerfassungseinheit (20) kommuniziert, wobei
die Trainingsdatenerfassungseinheit (20) die von dem 2D-Kamerasystem (6) erfassten 2D-Bilddaten (8) gemeinsam mit der Objektmarkierung (28) und der Objektklasse des unbekannten Objekts als Trainingsdaten für das neuronale Netz speichert, wobei ferner insbesondere
das Flurförderzeug (2) ferner eine Anzeige zur Ausgabe der 2D-Bilddaten (8) und eine Benutzerschnittstelle (26) zum Empfang von Benutzereingaben (30) umfasst, wobei
die Lasterkennungseinheit (18) ferner eine Position des unbekannten Objekts (32) in den 2D-Bilddaten (8) mit einer Objektmarkierung (28) markiert und die Objektmarkierung (28) gemeinsam mit der Objektklasse und den 2D-Bilddaten (8) auf der Anzeige (24) ausgibt, wobei die Benutzerschnittstelle (26) in Reaktion auf die Ausgabe der 2D-Bilddaten (8) mit der Objektmarkierung (28) und der Objektklasse auf der Anzeige (24) eine Benutzereingabe (30) als Trainingsdatenerfassungsbefehl empfängt, wobei die Benutzereingabe (30) ferner eine Bestätigung der Objektklasse oder Informationen zu einer alternativen Objektklasse umfasst.

10. Verfahren nach einem der Ansprüche 7 bis 9, wobei
die Lasterkennungseinheit (18) mit einer Fahrzeugsteuerung des Flurförderzeugs (2) datentechnisch gekoppelt ist und anhand von Betriebsdaten des Flurförderzeugs (2) aus der Fahrzeugsteuerung eine Umschlagsequenz der Last (12) erkennt und in Reaktion auf die Erkennung der Umschlagsequenz den Trainingsdatenerfassungsbefehl erzeugt und an die Trainingsdatenerfassungseinheit (22) kommuniziert, wobei insbesondere
die Lasterkennungseinheit (18) ferner in der Umschlagsequenz einen Zeitpunkt der Lastaufnahme und/oder der Lastablage bestimmt, und gemeinsam mit dem Trainingsdatenerfassungsbefehl der Trainingsdatenerfassungseinheit (20) einen Zielbereich des zumindest einen Teils des Lasttransporthilfsmittels (10) kommuniziert, der daraus abgeleitet wird, dass in der 2D-Bilddaten (8) zum Zeitpunkt der Lastaufnahme und/oder der Lastablage das Lasttransporthilfsmittel (10) mittig auf dem Lastaufnahmemittel (4) angeordnet ist,
oder
die Lasterkennungseinheit (18) anhand von Betriebsdaten des Flurförderzeugs (2) aus der Fahrzeugsteuerung auf eine Bewegung des Flurförderzeugs (2) in einem Zeitintervall umfassend die Umschlagsequenz zurückrechnet und eine Bewegung des Flurförderzeugs (2) in dem Zeitintervall kennzeichnende Bewegungsdaten gemeinsam mit dem Trainingsdatenerfassungsbefehl der Trainingsdatenerfassungseinheit (20) kommuniziert,
oder
die Lasterkennungseinheit (18) den zumindest einen Teil des Lasttransporthilfsmittels (10) im Lastaufnahmebereich unter Anwendung eines Erkennungsschwellenwerts detektiert, wobei die Lasterkennungseinheit (18) ferner die 2D-Bilddaten (8) aus einem Zeitintervall umfassend die Umschlagsequenz analysiert und eine Erkennung des zumindest einen Teils des Lasttransporthilfsmittels (10) mit unterschiedlichen Erkennungsschwellenwerten durchführt, wobei im Fall einer erfolgreichen Erkennung die 2D-Bilddaten (8) gemeinsam mit dem Schwellenwert, für den die Erkennung erfolgreich war, der Trainingsdatenerfassungseinheit (20) als Trainingsdaten für das neuronale Netz kommuniziert werden.

11. Verfahren nach einem der Ansprüche 7 bis 10, wobei
die Lasterkennungseinheit (18) den zumindest einen Teil des Lasttransporthilfsmittels (10) auf der Grundlage von Umfelddaten detektiert, die von den 2D-Bilddaten (8) verschieden sind, wobei die Umfelddaten den Lastaufnahmebereich räumlich umfassende Daten aus zumindest einer der folgenden Gruppe sind:
a) 3D-Daten eines 3D-Kamerasystems (38),
b) 3D-Daten eines Lichttasteraggregats,
c) Betriebsdaten einer Ablaufsteuerung des Flurförderzeugs (2).

12. Verfahren nach einem der Ansprüche 7 bis 11, wobei
die Trainingsdatenerfassungseinheit (18) ferner die Trainingsdaten über eine drahtlose Datenverbindung (40) oder eine drahtgebundene Datenverbindung (40), welche insbesondere über ein Ladegerät verläuft, an eine weitere Datenverarbeitungseinheit (42) kommuniziert und/oder
die Trainingsdatenerfassungseinheit (18) ferner aktualisierte Daten des neuronalen Netzes über eine drahtlose Datenverbindung (40) oder eine drahtgebundene Datenverbindung (40), welche insbesondere über ein Ladegerät verläuft, empfängt.

13. Verfahren zum Trainieren eines neuronalen Netzes, die folgenden Schritte umfassend:
Bereitstellen von Trainingsdaten durch Ausführung eines Verfahrens nach einem der Ansprüche 7 bis 11,
Hinzufügen oder Bestätigen von Objektmarkierungen (28) in den 2D-Bilddaten (8) und
Bereitstellen der mit Objektmarkierungen (28) versehenen 2D-Bilddaten (8) als Trainingsdaten für das neuronale Netz,
Trainieren des neuronalen Netzes auf eine Erkennung des zumindest einen Teils des Lasttransporthilfsmittels (10) in den 2D-Bilddaten (8).

14. Verfahren zum Erzeugen von Trainingsdaten für ein neuronales Netz eines Flurförderzeugs (2), indem das Flurförderzeug (2) in einer Logistikeinrichtung gemäß einem Verfahren nach einem der Ansprüche 7 bis 12 betrieben wird.

15. Verwendung eines Flurförderzeugs (2) nach einem der Ansprüche 1 bis 6 zur Erzeugung von Trainingsdaten für ein neuronales Netz des Flurförderzeugs (2).
